# EUROPÄISCHE PATENTSCHRIFT

(11) **EP 2 414 187 B1**
(45) Veröffentlichungstag und Bekanntmachung des Hinweises auf die Patenterteilung: **05.06.2013**
(21) Anmeldenummer: 10717513.5
(22) Anmeldetag: 15.03.2010
(51) Int. Cl.: B60K 17/04, F16H 1/00

(54) **GETRIEBEEINHEIT MIT TRANSVERSALEM FREIHEITSGRAD**
TRANSMISSION UNIT WITH TRANSVERSE FREEDOM
UNITÉ DE TRANSMISSION AVEC LIBERTE TRANSVERSAL

(30) Priorität: 01.04.2009 DE 102009002089
(43) Veröffentlichungstag der Anmeldung: 08.02.2012
(73) Patentinhaber: ZF Friedrichshafen AG, 88038 Friedrichshafen (DE)
(72) Erfinder: HAEUSLER, Felix, 49074 Osnabrück (DE)
(86) Internationale Anmeldenummer: PCT/DE2010/050013
(87) Internationale Veröffentlichungsnummer: WO 2010/112021

(56) Entgegenhaltungen:
- WO-A1-2009/138080
- US-A- 2 182 417

## Beschreibung

### Beschreibung für folgende(n) Vertragsstaat(en) : AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, SE, SI, SK, SM, TR

Die Erfindung betrifft eine Getriebeeinheit, insbesondere zum Antrieb eines Fahrzeugrades, wobei Antriebswelle und Abtriebswelle der Getriebeeinheit transversal relativ zueinander bewegbar sind.

Getriebeeinheiten zur Übertragung von Antriebsdrehmomenten, bei denen die Antriebswelle relativ zur Abtriebswelle transversal bzw. translatorisch beweglich ist - sprich, bei denen Antriebs- und Abtriebswelle bei gleichzeitiger Drehmomentübertragung gegeneinander im Wesentlichen parallel verschoben werden können, sind bekannt. Beispiele für derartige Getriebeeinheiten sind Seitenwellen an Radaufhängungen bzw. Kardanwellen, oder auch spezielle Antriebsstränge mit Ketten oder Riemen.

Derartige bekannte Getriebeeinheiten mit translatorischem Bewegungsfreiheitsgrad sind jedoch einerseits aufwändig, und benötigen andererseits einen erheblichen Bauraumumfang - insbesondere in axialer oder radialer Richtung - zur Verwirklichung der transversalen Beweglichkeit der beiden Wellen gegeneinander. Je nach Ausführung sind diese bekannten Getriebeeinheiten zudem auf eine bestimmte, im allgemeinen rotatorische Schwenkbewegung um einen Drehpunkt beschränkt, und ermöglichen damit streng genommen nicht eine rein translatorische Kinematik der Bewegung der beiden Wellen, falls keine Maßnahmen zum Längenausgleich der Kraftübertragungselemente (Riemen, Kette, Kardangelenke) getroffen werden, welche wiederum zusätzlichen konstruktiven Aufwand bedeuten.

Im Beispielfall des Einsatzes derartiger Getriebeeinheiten zum Antrieb der Räder eines Kraftfahrzeugs ist ferner das Gesamtsystem aus Antriebsstrang und Radaufhängung/Radführung zu betrachten, wobei die zur Radführung erforderliche Radaufhängung üblicherweise eine Anzahl von Lenkern aufweist, beispielsweise Längslenker, Schräglenker, Querlenker oder Verbundlenker.

Der zugehörige Antriebsstrang umfasst am Kraftfahrzeug üblicherweise einen Verbrennungsmotor mit angeflanschtem Schaltgetriebe oder Getriebeautomaten, eine oder zwei Antriebswellen und eines oder mehrere Differentiale mit den zugehörigen, zu den Rädern führenden Seitenwellen. Diese Baugruppen - insbesondere soweit sie die Radführungslenker sowie die Seitenwellen umfassen und somit den Radaufhängungen zuzuordnen sind - nehmen einen ganz erheblichen Bauraum im Bereich der Räder des Kraftfahrzeugs ein, welcher für andere Zwecke nicht mehr zur Verfügung steht, und damit den für Fahrgäste, Gepäck oder auch technische Baugruppen zur Verfügung stehenden Platz reduziert.

Dabei können die in einem konventionellen Antriebsstrang enthaltenen Baugruppen, insbesondere die Radführungslenker und die Antriebswellen, nicht beliebig verkleinert bzw. verkürzt werden, da sich hierdurch ungünstige kinematische Verhältnisse bei der Einfederungsbewegung des Rades ergeben würden.

Die Entwicklung bei den Antriebssträngen bzw. Kraftfahrzeugantrieben geht zudem zunehmend in Richtung der Hybridkonzepte. Hierunter fallen insbesondere auch die seriellen Hybride, bei denen keine mechanische Verbindung zwischen dem Verbrennungsmotor und den Antriebsrädern mehr besteht. Stattdessen kann bei einem seriellen Hybrid der Verbrennungsmotor beispielsweise einen Generator antreiben, welcher - ggf. batteriegepuffert - wiederum mit den Antriebsrädern verbundene Elektromotoren speist. Eine ähnliche Konfiguration kann auch bei einem reinen Elektrofahrzeug vorliegen, wobei die Energie hier nicht vom Verbrennungsmotor, sondern von einem elektrischen Energiespeicher geliefert wird; ebenso wie diverse Mischvarianten zwischen dem seriellen Hybrid und dem Elektrofahrzeug angedacht sind oder bereits existieren.

Um die Anzahl der für die Getriebeeinheit benötigten Komponenten sowie deren Bauraumbedarf und Masse möglichst gering zu halten, wird bei solchen Fahrzeugkonzepten teilweise versucht, die elektrischen Fahrmotoren direkt den Rädern zuzuordnen und möglichst nahe an den Rädern, bzw. als Radnabenmotoren in den Rädern selbst unterzubringen. Auf diese Weise können große Teile des konventionellen Antriebsstrangs entfallen, bzw. durch leicht und flexibel zu verlegende elektrische Leitungen zwischen dem Energieerzeuger und den Radnabenmotoren des Kraftfahrzeugs ersetzt werden.

Zusätzlich wurden bereits Anstrengungen unternommen, auch die Radaufhängung selbst mit den zugeordneten Feder/Dämpfereinheiten im Innenraum der Radfelgen bzw. in unmittelbarer Nachbarschaft der Räder unterzubringen, um auf diese Weise noch mehr Bauraum zu gewinnen, der ansonsten bei konventionellen Radaufhängungen für die bekannten Lenkerkonstruktionen erforderlich ist.

Aus der DE 698 06 444 T2 ist eine in die Felge eines Rades integrierbare Radaufhängung bekannt, bei welcher zusätzlich auch beispielsweise elektrische Antriebsmotoren zumindest teilweise im Innenraum der Radfelge untergebracht werden können. Bei dieser bekannten Radaufhängung ist jedoch der elektrische Antriebsmotor jeweils fest am Radträger angeflanscht, weshalb die Masse des Antriebsmotors den ungefederten Massen der Radaufhängung zugeschlagen werden muss. Da die für einen Radnabenantrieb eines Kraftfahrzeugs einsetzbaren Elektromotoren aufgrund der erforderlichen Leistungsfähigkeit eine erhebliche Masse aufweisen, werden hierdurch die ungefederten Massen der Radaufhängung ganz wesentlich vergrößert, worunter der Fahr- und Federungskomfort erheblich leidet, insbesondere da aufgrund der hohen ungefederten Massen viel härtere Stoßdämpfer verbaut werden müssen.

Aus der gattungsbildenden US 2,182,417 ist eine Getriebeeinheit für ein Fahrzeug bekannt, bei der versucht wurde, das Problem einer wünschenswerten transversalen Relativbeweglichkeit von Antriebswelle und Abtriebswelle eines Radnabenantriebs dadurch zu lösen, dass zwischen einem Antriebsritzel und einem auf der Abtriebswelle angeordneten Abtriebshohlrad Planetenzahnräder angeordnet wurden, wobei die Planetenzahnräder über jeweils einen Trägerarm schwenkbar mit der Antriebswelle verbunden sind. Auf diese Weise sollte eine permanente Kraftübertragung vom Antriebsritzel über die Planetenzahnräder auf das Hohlrad ermöglicht werden auch dann, wenn gleichzeitig (beispielsweise durch Einfederungsbewegungen des Rades) transversale Bewegungen zwischen Antriebsritzel und Hohlrad erfolgen.

Die aus dieser Druckschrift bekannte Lehre ist jedoch nachteilig insofern, als die Aufhängung der Planetenzahnräder gemäß der Lehre dieser Druckschrift lediglich über jeweils einen einzigen Trägerarm erfolgt, und zwar in Kombination mit einer bogenförmigen Gleitführung für einen Achsstummel des jeweiligen Planetenzahnrads im Getriebegehäuse. Hierdurch ergibt sich jedoch lediglich eine vergleichsweise instabile und in einigen Positionen zudem kinematisch unterbestimmte Lagerung der Planetenzahnräder, wobei die Planetenzahnräder außerdem nur auf einer Seite gelagert sind, und auf der anderen Seite lediglich fliegend in der Verzahnung des Abtriebshohlrads anliegen.

Mittels dieser aus dem Stand der Technik bekannten Getriebeeinheit lassen sich somit allenfalls geringe Drehmomente übertragen, da andernfalls von einer Überlastung der nur einseitigen Aufhängung der Planetenzahnräder sowie von einem frühzeitigen Ausschlagen der Planetenzahnrad-Gleitführung im Getriebegehäuse auszugehen ist. Auch die für heutige Getriebeverzahnungen erforderliche genaue Einhaltung des Achsabstands der Zahnräder dürfte mit der labilen Aufhängung der Planetenzahnräder gemäß der Lehre dieser Druckschrift nicht für längere Zeit möglich sein. Für die an heutigen Kraftfahrzeugen pro Rad anfallenden Drehmomente bzw. Leistungen ist die Getriebeeinheit gemäß der Lehre dieser Druckschrift somit keinesfalls einsetzbar.

Mit diesem Hintergrund ist es Aufgabe der vorliegenden Erfindung, eine Getriebeeinheit insbesondere für ein Fahrzeugrad zu schaffen, mit welcher die genannten Nachteile des Standes der Technik überwunden werden können. Insbesondere soll die Getriebeeinheit auf kleinstem Raum eine transversale bzw. translatorische Entkopplung zwischen einer Antriebswelle und einer Abtriebswelle ermöglichen. Auf diese Weise soll es insbesondere möglich werden, Radnabenmotoren bezüglich der Einfederungsbewegungen eines Rades von der Radaufhängung zu entkoppeln, und auf diese Weise die ungefederten Massen der Radaufhängung massiv zu reduzieren. Dabei soll jedoch zudem eine dauerhafte und sichere Übertragung auch hoher Drehmomente und Leistungen erfolgt können.

Diese Aufgabe wird durch eine Getriebeeinheit mit den Merkmalen des Patentanspruchs 1 gelöst. Bevorzugte Ausführungsformen sind Gegenstand der Unteransprüche.

In für sich genommen zunächst bekannter Weise umfasst die Getriebeeinheit gemäß der vorliegenden Erfindung eine Antriebswelle und eine zur Antriebswelle in paralleler Richtung angeordnete Abtriebswelle. Dabei ist auf der Antriebswelle ein Antriebsritzel und auf der Abtriebswelle ein Abtriebshohlrad angeordnet. In an sich ebenfalls bekannter Weise sind Antriebswelle und Abtriebswelle parallel zueinander - also in senkrechter Richtung zu ihren jeweiligen Rotationsachsen - translatorisch gegeneinander bewegbar, um auf diese Weise translatorische bzw. transversale Verschiebungen zwischen Antriebswelle und Abtriebswelle - bei gleichzeitiger Drehmomentübertragung - ausgleichen zu können. Zu diesem Zweck weist die Getriebeeinheit zunächst einmal zumindest ein Planetenzahnrad auf, welches sowohl mit dem Antriebsritzel als auch mit dem Abtriebshohlrad in Eingriff steht und auf einer Planetenachse eines Planetenträgers gelagert ist. Der Planetenträger wiederum ist koaxial zum Antriebsritzel bzw. koaxial zur Antriebswelle gelagert.

Erfindungsgemäß jedoch zeichnet sich die Getriebeeinheit durch einen dem Planetenzahnrad ebenfalls zugeordneten zweiten Planetenträger aus, welchem dieselbe, das Planetenzahnrad tragende Planetenachse zugeordnet ist wie dem ersten Planetenträger. Dabei ist das Planetenzahnrad in Axialrichtung zwischen dem ersten Planetenträger und dem zweiten Planetenträger angeordnet, und der zweite Planetenträger ist koaxial zum Abtriebshohlrad gelagert.

Dies bedeutet mit anderen Worten zunächst einmal, dass erfindungsgemäß beide Enden der Achse des Planetenzahnrads jeweils in einem eigenen Planetenträger gehaltert sind. Das Planetenzahnrad ist somit nicht - wie beim Stand der Technik - nur fliegend auf einer Seite gelagert, während die andere Seite im Stand der Technik entweder gar nicht oder lediglich in einer instabilen Gleitführung im Getriebegehäuse gelagert ist.

Auf diese Weise wird das Planetenzahnrad also erfindungsgemäß durch die beiden Planetenträger - die mittels ihrer gemeinsamen Planetenachse miteinander schwenkbeweglich gekoppelt sind - stets so, geführt, dass das Planetenzahnrad sowohl mit dem Antriebsritzel als auch mit dem Abtriebshohlrad in permanentem Eingriff steht. Dabei sorgt der erste Planetenträger, der koaxial zur Antriebswelle gelagert ist, dafür, dass das Planetenzahnrad mit dem Antriebsritzel in Eingriff bleibt, während der zweite Planetenträger, der koaxial zum Abtriebshohlrad gelagert ist, dafür sorgt, dass das Planetenzahnrad permanent mit dem Abtriebshohlrad in Eingriff bleibt.

Vorteilhaft ist es dabei zunächst einmal, dass die Getriebeeinheit äußerst kompakt ausgebildet werden kann, da sie prinzipiell ebenso wenig Raum beansprucht wie beispielsweise ein konventionelles Planetengetriebe. Im Vergleich zu anderen aus dem Stand der Technik bekannten Antriebssträngen mit translatorischem Freiheitsgrad - wie beispielsweise Seiten- bzw. Kardanwellen - ergibt sich somit ein massiv reduzierter Bauraumbedarf, der lediglich einem Bruchteil des Bauraumbedarfs anderer bekannter Lösungen mit jeweils vergleichbarer Drehmomentbelastbarkeit entspricht.

Die erfindungsgemäße Getriebeeinheit kommt damit auf den ersten Blick einem Planetengetriebe nahe, wobei das Antriebsritzel dem Sonnenrad, das Planetenzahnrad einem Planetenzahnrad des Planetengetriebes und das Abtriebshohlrad dem Hohlrad des Planetengetriebes entspricht. Im Unterschied zu einem Planetengetriebe (wie auch im Unterschied zu dem oben genannten Stand der Technik) wird das Planetenzahnrad bei der erfindungsgemäßen Getriebeeinheit jedoch nicht nur durch einen, sondern durch zwei separate, jedoch miteinander schwenkbeweglich gekoppelte Planetenträger geführt, wobei der erste Planetenträger koaxial zur Antriebswelle und der zweite Planetenträger koaxial zum Abtriebshohlrad gelagert ist, wobei das Planetenzahnrad in Axialrichtung zwischen den beiden Planetenträgern angeordnet ist, und wobei die beiden Planetenträger zur gegenseitigem Kopplung eine gemeinsame Planetenachse aufweisen, die wiederum mit der Achse des Planetenzahnrads zusammenfällt.

Im Unterschied beispielsweise zu einem konventionellen Planetengetriebe findet bei der Getriebeeinheit also keine umlaufende Rotation der Planetenträger und des Planetenzahnrads um die zentrale Aufhängung (dort am Sonnenrad) statt. Vielmehr dienen die beiden Planetenträger der erfindungsgemäßen Getriebeeinheit dazu, eine koordinierte Schwenkbewegung des Planetenzahnrads sowohl und gleichzeitig um die Drehachse der Antriebswelle als auch um die Drehachse des Abtriebshohlrads - bei gleichzeitigem permanentem Eingriff des Planetenzahnrads sowohl mit dem Antriebsritzel als auch mit dem Abtriebshohlrad - zu gewährleisten.

Auf diese Weise ergibt sich der erfindungsgemäße Vorteil, dass Antriebswelle und Abtriebswelle mit Antriebsritzel und Abtriebshohlrad translatorisch gegeneinander parallelverschoben werden können, wobei gleichzeitig die Übertragbarkeit hoher Drehmomente zwischen Antriebsritzel und Abtriebshohlrad - unabhängig von der Parallelverschiebung von Antriebswelle und Abtriebswelle - erhalten bleibt.

Der Erfindung liegt somit primär die Erkenntnis zugrunde, dass - insbesondere bei der Verwendung eines Hohlrads als Abtriebshohlrad - ein zweiter Planetenträger so im Hohlrad angeordnet und koaxial zum Hohlrad gelagert werden kann, dass das Planetenzahnrad in dem die Planetenachse bildenden Schnittpunkt der beiden Planetenträger, sowie axial zwischen den beiden Planetenträger, angeordnet werden kann. Auf diese Weise ergibt sich eine außerordentliche Steifigkeit der Lagerung des Planetenzahnrads, indem dessen Achse permanent an beiden Enden abgestützt wird. Zudem kann die anfällige, nicht effektive und wenig belastbare Lagerung der Achse des Planetenzahnrads in der aus dem Stand der Technik bekannten bogenförmigen Gleitbaln im Getriebegehäuse entfallen. Insgesamt lassen sich mit der erfindungsgemäßen Getriebeeinheit - im Gegensatz zu dem oben genannten Stand der Technik - somit auch Leistungen bzw. Drehmomente übertragen, wie sie insbesondere an den Rädern heutiger Kraftfahrzeuge üblich sind.

Gemäß einer besonders bevorzugten Ausführungsform der Erfindung ist die den beiden Planetenträgern gemeinsame Planetenachse zudem einstückig mit dem ersten oder mit dem zweiten Planetenträger ausgebildet. Auf diese Weise ergibt sich eine weitere Erhöhung der Steifigkeit der Lagerung des Planetenzahnrads, die Herstellungs- und Montagekosten können verringert werden, und zudem lässt sich der axiale Platzbedarf der Getriebeeinheit minimieren.

Die Erfindung wird unabhängig davon verwirklicht, wie die Lagerung der beiden Planetenträger konstruktiv ausgebildet ist, solange die Lagerung der beiden Planetenträger koaxial zur Antriebswelle bzw. zur Abtriebswelle erfolgt. Gemäß einer besonders bevorzugten Ausführungsform ist der erste Planetenträger jedoch unmittelbar auf der Antriebswelle und der zweite Planetenträger im Hohlrad unmittelbar auf der Abtriebswelle gelagert.

Diese Anordnung hat den Vorteil eines minimalen, insbesondere axialen Platzbedarfs, indem fast die gesamte Getriebeeinheit im Innenraum des Hohlrads angeordnet werden kann.

Prinzipiell lässt sich die Erfindung weitgehend unabhängig von Größen und Zähnezahlverhältnissen zwischen Antriebsritzel, Planetenzahnrad und Abtriebshohlrad verwirklichen, solange der Zahnradeingriff gewährleistet ist.

Gemäß einer besonders bevorzugten Ausführungsform der Erfindung jedoch weisen der erste Planetenträger und der zweite Planetenträger denselben Wirkradius auf. Dies bedeutet mit anderen Worten, dass der radiale Abstand zwischen der Antriebswelle und der Achse des Planetenzahnrads mit dem radialen Abstand zwischen der Abtriebswelle und der Achse des Planetenzahnrads übereinstimmt, somit die Achse des Planetenzahnrads also von der Antriebswelle denselben Abstand wie von der Abtriebswelle aufweist.

Diese Ausführungsform ist vorteilhaft insofern, als auf diese Weise der maximale Achsversatz bzw. die maximale translatorische Bewegungsfreiheit zwischen Antriebswelle und Abtriebswelle erreicht wird. Überdies ergibt sich dabei der weitere Vorteil in der Form, dass durch beliebige translatorische Bewegungen zwischen Antriebswelle und Abtriebswelle im Rahmen der Bewegungsfreiheit der erfindungsgemäßen Getriebeeinheit aus geometrischen Gründen keinerlei Drehzahlfehler zwischen Antriebswelle und Abtriebswelle induziert werden. Dies hängt damit zusammen, dass die in diesem Fall den gleichen Wirkradius aufweisenden Planetenträger der Getriebeeinheit bei jeder Transversalbewegung grundsätzlich um dasselbe Winkelmaß verschwenkt werden, wodurch induzierte Drehwinkel bzw. Drehzahlfehler nur innerhalb der Getriebeeinheit auftreten, sich nach außen jedoch vollständig ausgleichen.

Gemäß einer weiteren, besonders bevorzugten Ausführungsform der Erfindung sind die Planetenträger lediglich als jeweils zwei Lagerstellen umfassende Schwenkhebel ausgebildet. Auch diese Ausführungsform steht im Dienst einer besonders kompakten Ausführung der erfindungsgemäßen Getriebeeinheit. Bei dieser Ausführungsform sind die Planetenträger somit funktionsgemäß auf ihre Aufgabe reduziert, das Planetenzahnrad der Getriebeeinheit mit der Antriebswelle sowie mit der Abtriebswelle zu verbinden, bzw. relativ zur Antriebswelle und zur Abtriebswelle schwenkbar zu lagern, und gleichzeitig den korrekten Abstand zwischen Planetenzahnrad und Antriebsritzel sowie zwischen Planetenzahnrad und Abtriebshohlrad und damit den Zahneingriff auch bei Transversalbewegungen zu gewährleisten.

Gemäß einer besonders bevorzugten Ausführungsform der Erfindung umfasst die Getriebeeinheit zwei Planetenzahnräder und vier Planetenträger. Dabei ist jedem Planetenzahnrad ein Paar aus einem ersten Planetenträger und einem zweiten Planetenträger zugeordnet. Bei dieser Ausführungsform ergibt sich eine noch höhere Leistungs- und Drehmomentübertragung mittels der beiden Planetenzahnräder, wobei die beiden Planetenzahnräder in der Neutralstellung der Getriebeeinheit bezüglich der Antriebswelle vorzugsweise einander gegenüber angeordnet sind. Aufgrund der dadurch bedingten zumindest teilweisen Aufhebung der radialen Verzahnungskräfte auf die beiden Planetenzahnräder ergibt sich bei dieser Ausführungsform zudem eine gegenseitige Abstützung der beiden Planetenzahnräder zwischen Antriebsritzel und Hohlrad, und damit insgesamt eine noch bessere Steifigkeit der Zahnradanordnung der Getriebeeinheit.

Vorzugsweise sind dabei die dem zweiten Planetenzahnrad zugeordneten beiden Planetenträger jeweils koaxial auf den beiden Planetenträgern gelagert, die dem ersten Planetenzahnrad zugeordnet sind. Durch diese koaxiale Lagerung der dem zweiten Planetenzahnrad zugeordneten Planetenträger auf den dem ersten Planetenzahnrad zugeordneten Planetenträger wird axialer Bauraum eingespart, und es ergibt sich zudem eine Lagerung mit hoher Gesamtsteifigkeit bezüglich der hier aus vier Planetenträgern bestehenden Planetenträgeranordnung.

Gemäß einer weiteren bevorzugten Ausführungsform ist vorgesehen, dass die Getriebeeinheit als Radantrieb ausgebildet wird und in eine Radfelge integriert ist, wobei das Abtriebshohlrad gleichzeitig unmittelbar mit der Radnabe verbunden ist. Vorzugsweise ist die Getriebeeinheit dabei zudem als Radnabenantrieb ausgebildet und unmittelbar mit einem Antriebsmotor verbunden.

Auf diese Weise lässt sich ein äußerst kompakter Radnabenantrieb darstellen, der zunächst einmal den entscheidenden Vorteil aufweist, vertikale Einfederungsbewegungen eines angetriebenen Rades vollkommen unbeeinträchtigt zuzulassen, ohne dass hierzu übliche Antriebsglieder wie Seitenwellen oder Kettentriebe notwendig wären. Vielmehr ermöglicht die erfindungsgemäße Getriebeeinheit in dieser Ausführungsform eine freie - insbesondere vertikale - Einfederungsbewegung des angetriebenen Rades, wobei gleichzeitig die in der Radnabe entspringende Antriebswelle des Rades der vertikalen Bewegung des Rades nicht folgt, sondern in vertikaler Richtung vielmehr fahrzeugbezogen festgelegt sein kann. Die Antriebswelle des Rades kann somit - ohne Zwischenschaltung von Seitenwellen - beispielsweise direkt am Fahrzeugchassis gelagert bzw. direkt mit einem Achs- oder Radantrieb verbunden werden.

Im Fall der Ausführung der erfindungsgemäßen Getriebeeinheit als Radnabenantrieb mit unmittelbar angeschlossenem Antriebsmotor ergibt sich zudem der entscheidende Vorteil, dass der Antriebsmotor - obwohl zum Beispiel unmittelbar an der Radnabe angeordnet - nicht fest mit der Radnabe bzw. mit dem Radträger verbunden sein muss, sondern bezüglich der Einfederungsbewegung des Rades von diesem vollständig entkoppelt werden kann. Dies bedeutet mit anderen Worten, dass der Antriebsmotor eines die erfindungsgemäße Getriebeeinheit umfassenden Radnabenantriebs insbesondere karosserie- bzw. chassisfest angeordnet werden kann, während das angetriebene Rad vom Antrieb unbeeinflusst seine Einfederungsbewegungen ausführen kann. Auf diese Weise wird der Nachteil der aus dem Stand der Technik bekannten Radnabenantriebe, bei denen der Antriebsmotor den ungefederten Massen der Radaufhängungen zugeschlagen ist, beseitigt. Es wird somit dank der Erfindung möglich, einen drehmomentbeständigen Radnabenantrieb darzustellen, der einen mit einer üblichen Radaufhängung vergleichbaren Federungskomfort bietet.

Als Antriebsmotoren des Radnabenantriebs können im Prinzip beliebige Motoren herangezogen werden. Zu denken ist hier beispielsweise auch an Hydraulikmotoren. Insbesondere mit dem Hintergrund des Einsatzes der erfindungsgemäßen Getriebeeinheit im Bereich der Personenkraftwagen mit Elektro- bzw. Hybridantrieb ist gemäß einer besonders bevorzugten Ausführungsform der Erfindung jedoch vorgesehen, dass es sich bei dem Antriebsmotor des Radnabenantriebs um einen Elektromotor handelt.

Auf diese Weise wird ein höchst kompakter elektrischer Radnabenantrieb erhalten, der beispielsweise durch den von einer Batterie bzw. von einem Verbrennungsmotor mit Generator erzeugten Strom gespeist werden kann.

Dabei bildet vorzugsweise die Motorwelle des Antriebsmotors unmittelbar die Antriebswelle, und das Antriebsritzel der Getriebeeinheit ist direkt auf der Motorwelle angeordnet. Auf diese Weise lässt sich der Antriebsmotor unmittelbar am angetriebenen Rad, bzw. je nach Form und Größe des Antriebsmotors und der Felge sogar innerhalb der Radfelge anordnen.

Gemäß einer weiteren, besonders bevorzugten Ausführungsform der Erfindung ist die Getriebeeinheit in einem Radträger angeordnet, der zugleich als Getriebegehäuse ausgebildet ist. Hierdurch wird eine besonders kompakte und robuste Ausführung der als Radnabenantrieb ausgebildeten Getriebeeinheit erreicht, indem die Zahnräder der Getriebeeinheit im Innenraum des als Getriebegehäuse ausgebildeten Radträgers angeordnet werden können.

Insbesondere mit dem Hintergrund eines unmittelbar an eine erfindungsgemäße Getriebeeinheit angeflanschten Antriebsmotors ist vorzugsweise ein elastischer Faltenbalg mit radialem bzw. transversalem Bewegungsfreiheitsgrad zwischen der Wellenseite des Antriebsmotors und der Getriebeeinheit vorgesehen. Auf diese Weise können die beim Einfedern des Rades entstehenden Relativbewegungen zwischen Rad und Getriebeeinheit einerseits und dem am Fahrzeugchassis angeordneten Antriebsmotor ausgeglichen werden, wobei die Antriebswelle des Motors und die Getriebeeinheit gleichzeitig vor Umgebungseinflüssen geschützt sind.

Die Verwirklichung der Erfindung ist zunächst einmal unabhängig von der konstruktiven Darstellung der transversalen Relativbeweglichkeit zwischen Antriebswelle und Abtriebswelle. Die transversale Relativbeweglichkeit der Getriebeeinheit kann - im Beispielfall der Anwendung bei einer Radaufhängung - beispielsweise mittels einer für sich genommen bekannten Lenkeranordnung realisiert werden.

Gemäß einer alternativen Ausführungsform der Erfindung weist die Getriebeeinheit jedoch eine Linearführung auf, bzw. ist mit einer Linearführung verbunden. Mittels der Linearführung wird eine rein lineare translatorische bzw. transversale Relativbewegung zwischen Antriebswelle und Abtriebswelle gewährleistet, der Bewegungsfreiheitsgrad zwischen Antriebswelle und Abtriebswelle ist somit entsprechend auf die gewünschte translatorische Bewegung eingeschränkt. Eine derartige Linearführung ist vorteilhaft insofern, als sie im Vergleich mit Lenkeranordnungen lediglich ein Minimum an (axialem) Bauraum beansprucht, was insbesondere bei Radaufhängungen von Bedeutung sein kann, bei denen die Linearführung der Getriebeeinheit somit einerseits die lineare transversale Beweglichkeit zwischen Antriebswelle und Abtriebswelle gewährleistet, wie auch andererseits die Radaufhängung selbst bildet.

Dabei können Lagergehäuse für die Lagerbuchsen der Linearführung beispielsweise einstückig mit dem Radträger ausgebildet oder unmittelbar mit dem Radträger verbunden sein. Auf diese Weise kann der Radträger nicht nur die Aufgaben der Führung und Lagerung des Rades und der Kapselung der erfindungsgemäßen Getriebeeinheit übernehmen, sondern bildet zudem auch den beweglichen Teil der Radaufhängung. Mit anderen Worten bedeutet dies, dass die Lagergehäuse der Linearführung, in denen beispielsweise die Gleitflächen oder Lagerbuchsen der Linearführung angeordnet sind, in einem Stück mit dem Radträger ausgebildet oder unmittelbar mit dem Radträger verbunden werden können, was eine verwindungssteife und leichte Konstruktion der Radaufhängung ermöglicht.

Insbesondere für den Fall der Ausbildung der Getriebeeinheit als kompakter Radnabenantrieb, der gleichzeitig auch die beschriebene Linearführung zur Aufhängung des Rades umfasst, lässt sich somit der Bauraumbedarf für ein angetriebenes Rad eines Kraftfahrzeugs einschließlich dessen Antrieb und Aufhängung entscheidend verringern - ggf. auf einen Bruchteil des bei konventionellen Antriebssträngen und Radaufhängungen benötigten Bauraums.

Bei höheren Anforderungen an die Kinematik einer Radaufhängung, beispielsweise bei sportlicheren Fahrzeugen, kann die erfindungsgemäße Getriebeeinheit als Radträger und Teil eines Radnabenantriebs jedoch auch mittels einer Lenkeranordnung am Fahrzeugchassis angeordnet werden. Mit diesem Hintergrund sieht eine weitere Ausführungsform der Erfindung vor, dass zwischen dem Antriebsritzel der Getriebeeinheit und dem Antriebsmotor des Radnabenantriebs zumindest ein Wellen-Ausgleichsgelenk angeordnet ist. Mit diesem Ausgleichsgelenk lassen sich die geringfügigen axialen Längenveränderungen und geringfügigen Winkeldifferenzen ausgleichen, die beim Einfedern des Fahrzeugrades auftreten können, wenn das Rad nicht mittels einer Linearführung, sondern mittels einer Anordnung aus Radführungslenkern mit dem Fahrzeugchassis verbunden ist.

Um die sichere Drehmomentübertragung in allen Betriebszuständen der Getriebeeinheit zu gewährleisten, ist es gemäß einer weiteren Ausführungsform der Erfindung vorgesehen, dass an zumindest einem der Planetenträger eine Verdrehsicherung angeordnet ist. Die Verdrehsicherung ist dabei so ausgebildet, dass in der Neutralstellung der Getriebeeinheit, also bei axialer Überdeckung von Antriebswelle und Abtriebswelle, eine ansonsten mögliche Rotation der Planetenträger und damit auch der Planetenzahnräder um die sich in diesem Fall überdeckenden Achsen von Antriebswelle und Abtriebswelle, und damit eine Unterbrechung der Drehmomentübertragung, unterbunden wird.

Für den Fachmann wird nach dem Gesagten erkennbar, dass das kinematische Prinzip der Erfindung nicht auf Zahnradgetriebe beschränkt ist. Mit diesem Hintergrund ist es gemäß einer alternativen Ausführungsform der Erfindung vorgesehen, dass die Getriebeeinheit anstelle der Zahnräder Reibräder aufweist, deren Durchmesserverhältnisse insbesondere proportional zu den Zähnezahlverhältnissen der Zahnräder der Getriebeeinheit gewählt werden können.

Im Folgenden wird die Erfindung anhand lediglich Ausführungsbeispiele darstellender Zeichnungen näher erläutert. Dabei zeigt:
- **Fig. 1**: in isometrischer Darstellung eine Ausführungsform einer erfindungsgemäßen, hier in einen Radnabenantrieb mit Linearführung integrierten Getriebeeinheit;
- **Fig. 2**: den Radnabenantrieb mit Getriebeeinheit gemäß **Fig. 1** bei demontiertem Antriebsmotor;
- **Fig. 3**: in einer **Fig. 1** und **Fig. 2** entsprechenden Darstellung eine Ausführungsform einer erfindungsgemäßen Getriebeeinheit als Radnabenantrieb mit Lenkeranordnung zur Radführung;
- **Fig. 4**: in einer **Fig. 1** und **Fig. 3** entsprechenden Darstellung den Radnabenantrieb mit Getriebeeinheit gemäß **Fig. 3** mit abgenommenem Getriebegehäusedeckel;
- **Fig. 5**: die Getriebeeinheit des Radnabenantriebs gemäß **Fig. 3** und **4** in einer Ausschnittsvergrößerung;
- **Fig. 6**: den Radnabenantrieb mit Getriebeeinheit gemäß **Fig. 3** bis **5** im Axialschnitt;
- **Fig. 7**: den Radnabenantrieb mit Getriebeeinheit gemäß **Fig. 3** bis **6** in schematischer Seitenansicht, Rad in vollständig ausgefedertem Zustand;
- **Fig. 8**: den Radnabenantrieb mit Getriebeeinheit gemäß **Fig. 3** bis **7** in **Fig. 7** entsprechender Ansicht, Rad im neutralen Federungszustand; und
- **Fig. 9**: den Radnabenantrieb mit Getriebeeinheit gemäß **Fig. 3** bis **8** in einer **Fig. 7** und **8** entsprechenden Ansicht, Rad in vollständig eingefedertem Zustand.

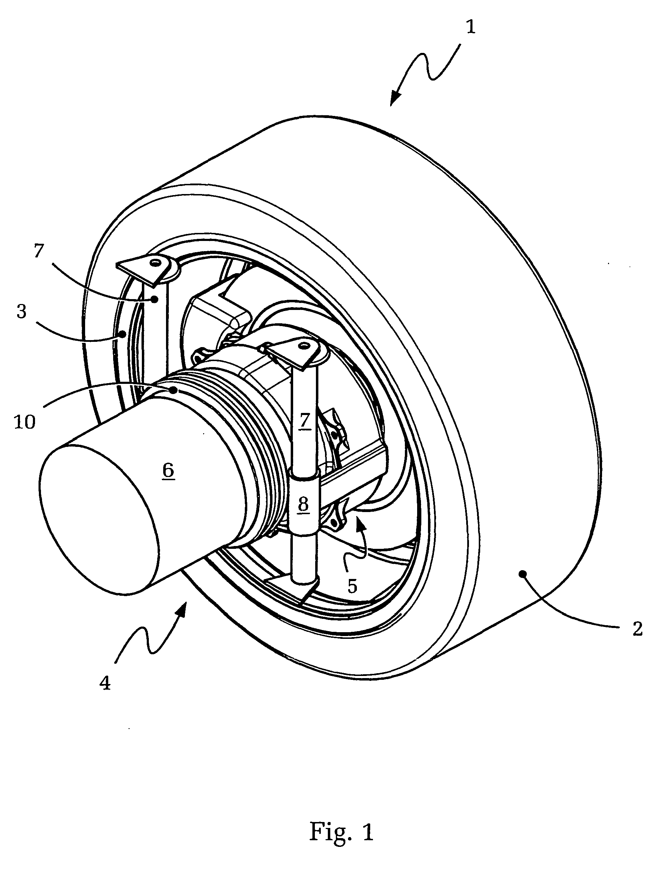

**Fig. 1** zeigt in isometrischer Darstellung eine Ausführungsform einer Getriebeeinheit gemäß der vorliegenden Erfindung, die hier als Radnabenantrieb ausgebildet bzw. in einen Radnabenantrieb integriert ist.

Man erkennt zunächst einmal ein Fahrzeugrad 1 mit einem Reifen 2 und einer Felge 3, sowie ferner einen Radnabenantrieb 4 mit einer Getriebeeinheit 5 und einem Antriebsmotor 6. Der dargestellte Radnabenantrieb 4 ist zudem mit einer hier lediglich schematisch dargestellten Linearführung 7, 8 als Radaufhängung ausgestattet, die in der dargestellten Ausführungsform zwei Führungsstangen 7 sowie zwei Lagergehäuse 8 aufweist. Die Lagergehäuse 8 dienen als bzw. enthalten Führungsbuchsen und können somit auf den chassisfesten Führungsstangen 7 in vertikaler Richtung auf und ab gleiten. Ebenfalls zur Radaufhängung gehörige Feder/Dämpfereinheiten sind der besseren Übersichtlichkeit halber in den Figuren nicht dargestellt.

Da der Antriebsmotor 6 (ebenso wie die Führungsstangen 7) fest mit dem (nicht dargestellten) Fahrzeugchassis verbunden ist, während das Rad 1 mit der erfindungsgemäßen Getriebeeinheit 5 vertikale Einfederungsbewegungen 9 ausführen kann, ist zwischen dem Antriebsmotor 6 und der Getriebeeinheit 5 ein in radialer bzw. transversaler Richtung elastischer Faltenbalg 10 angeordnet, der die Antriebswelle 11 bei den Relativbewegungen zwischen Rad 1 und Antriebsmotor 6 vor Verschmutzungen schützt.

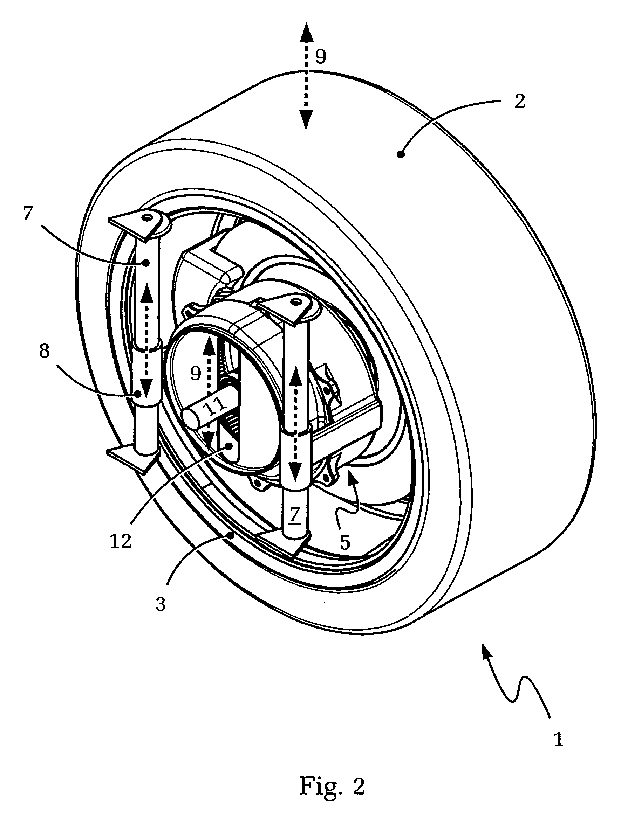

**Fig. 2** zeigt den Radnabenantrieb gemäß **Fig. 1** **-** zur besseren Erkennbarkeit der Getriebeeinheit 5 - bei demontiertem Antriebsmotor **6**. Zusätzlich zu den schon in **Fig. 1** dargestellten Elementen wird in **Fig. 2** insbesondere die Antriebswelle 11 der Getriebeeinheit 5 erkennbar. Anhand des schlitzförmigen Langlochs 12 im Gehäuse der Getriebeeinheit 5 wird in **Fig. 2** die transversale Beweglichkeit 9 der Antriebswelle 11 relativ zum Gehäuse der Getriebeeinheit 5 bzw. relativ zu dem angetriebenen Rad 1 angedeutet, siehe strichlierter Doppelpfeil 9 in **Fig. 2****.**

Dies bedeutet, dass die Antriebswelle 11 (sowie der Antriebsmotor 6, dessen Welle hier mit der Antriebswelle 11 identisch ist) ebenso wie die Führungsstangen 7 der Linearführung 7, 8 chassisfest positioniert sind, während die sonstigen Bestandteile der Getriebeeinheit 5, das Gehäuse der Getriebeeinheit sowie das angetriebene Rad 1 vertikale Einfederungsbewegungen 9 ausführen können.

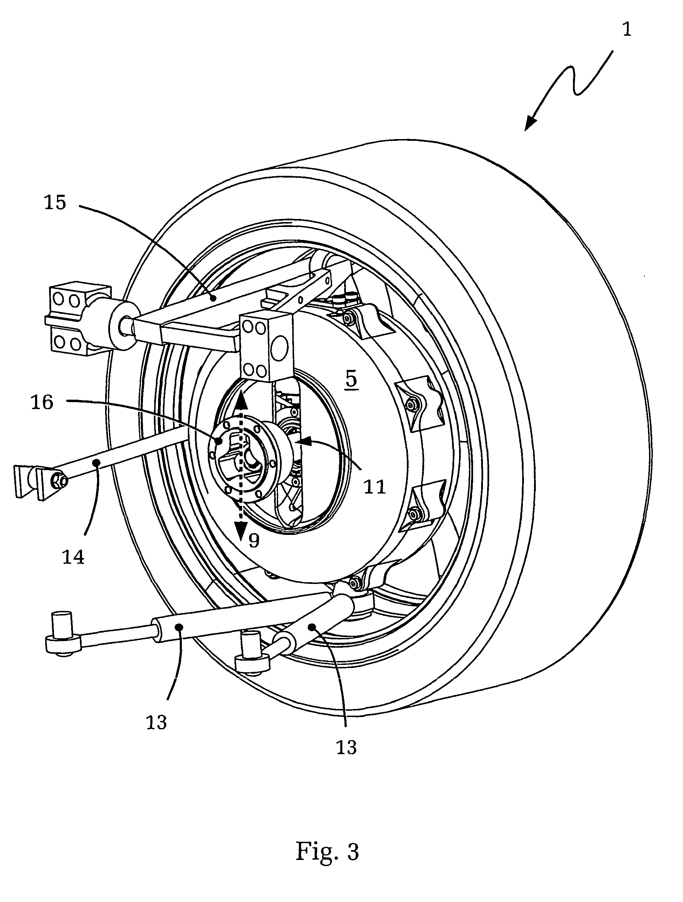

**Fig. 3** zeigt eine weitere Ausführungsform einer erfindungsgemäßen Getriebeeinheit 5. In **Fig. 3** ist die Getriebeeinheit 5 ebenfalls in einem Radnabenantrieb integriert, wobei die Radaufhängung im Unterschied zu dem Ausführungsbeispiel gemäß **Fig. 1** und **2** nicht mittels einer Linearführung, sondern anhand einer Anordnung aus Radführungslenkern 13, 14, 15 erfolgt. Die Radführungslenker 13, 14, 15 sind für sich genommen in bekannter Weise jeweils an einem Ende elastisch bzw. gelenkig mit dem (nicht dargestellten) Chassis des Kraftfahrzeugs verbunden, während sie mit dem radseitigen Ende ebenfalls elastisch bzw. gelenkig mit der hier gleichzeitig den Radträger bildenden Getriebeeinheit 5 verbunden sind.

Die Aufhängung des Rades 1 mittels einer Lenkeranordnung 13, 14, 15 führt dazu, dass beim Einfedern des Rades 1 - zusätzlich zu den vertikalen und auf die Antriebswelle bezogenen transversalen Bewegungen des Rades 1 - auch geringfügige seitliche bzw. auf die Antriebswelle 11 bezogen axiale Bewegungen des Rades 1 erfolgen. Abhängig von der genauen Geometrie der Radführungslenker 13, 14, 15 kann beim Einfedern zudem auch eine geringfügige Veränderung des Radsturzes erfolgen. Dies bedeutet, dass die Einfederungsbewegung des Rades 1 bei der hier gezeigten Ausführungsform mit Radführungslenkern 13, 14, 15 nicht ausschließlich vertikal bzw. linear erfolgt.

Aus diesem Grund ist bei dieser Ausführungsform zwischen der Antriebswelle 11 der Getriebeeinheit 5 und dem Antriebsmotor (hier nicht dargestellt, vgl. aber **Fig. 1**) ein Ausgleichsgelenk 16 angeordnet, das den durch die Radführungslenker 13, 14, 15 hervorgerufenen geringfügigen axialen Versatz und etwaige geringfügige Sturz-Winkelabweichungen beim Einfedern des Rades aufnimmt bzw. ausgleicht. Auch hierbei wird der rein vertikale Anteil 9 der Einfederungsbewegung erfindungsgemäß jedoch vollständig innerhalb der Getriebeeinheit 5 aufgenommen und ausgeglichen.

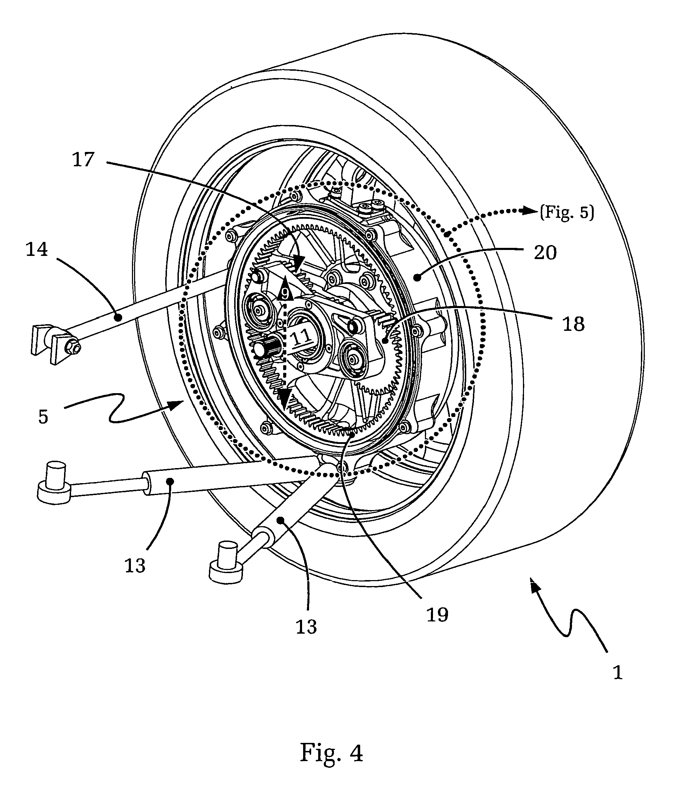

**Fig. 4** zeigt die Getriebeeinheit 5 des Radnabenantriebs gemäß **Fig. 3** bei abgenommenem Getriebegehäusedeckel. Man erkennt bereits einige wesentliche Bestandteile der Getriebeeinheit 5, nämlich zwei Planetenzahnräder 17, 18 und das - mit der Radnabe verschraubte - Abtriebshohlrad 19. Umschlossen wird das Abtriebshohlrad 19 von dem zugleich als Getriebegehäuse 20 ausgebildeten Radträger, der gleichzeitig die Gelenkaufnahmen zum Angriff der Radführungslenker 13, 14, 15 bildet bzw. trägt.

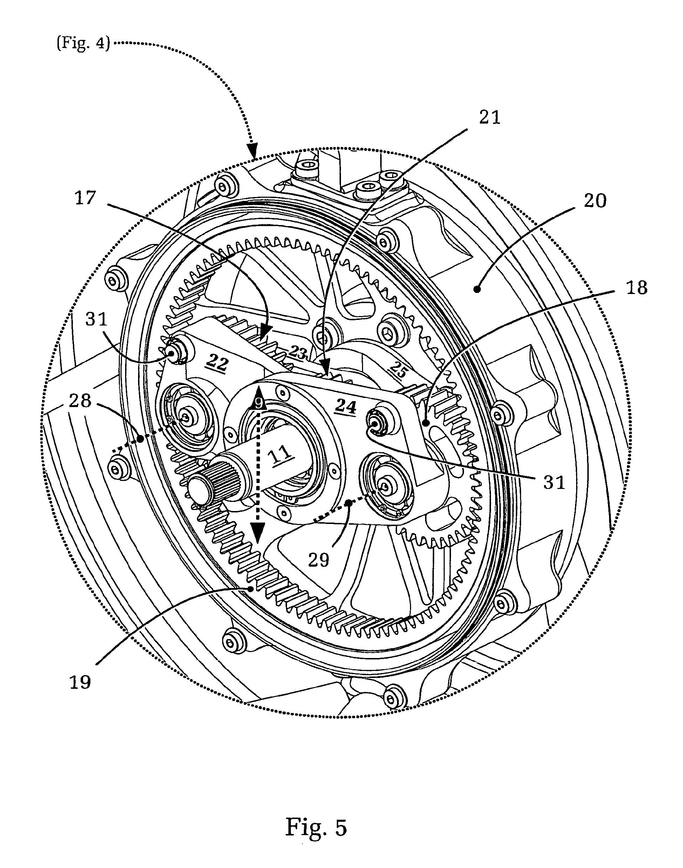

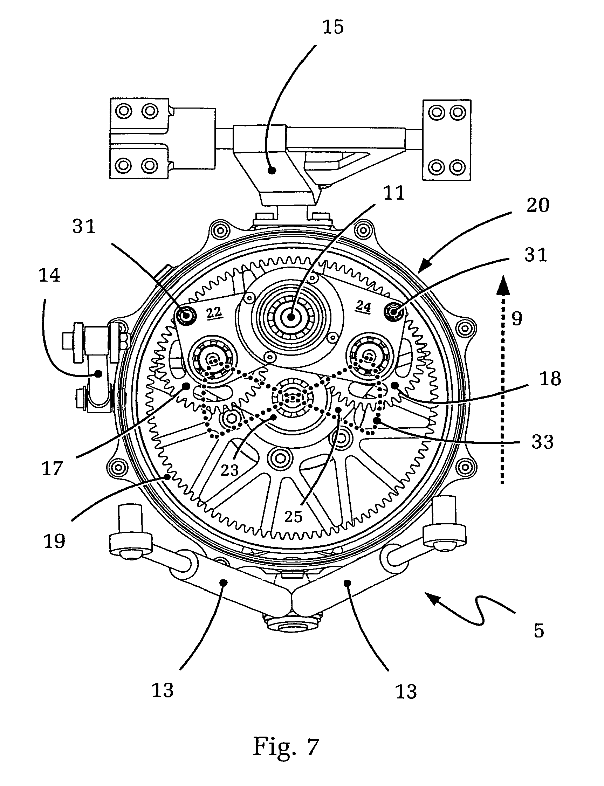

Die Getriebeeinheit 5 aus **Fig. 4** ist der besseren Erkennbarkeit halber in **Fig. 5** in einer Ausschnittsvergrößerung dargestellt. Man erkennt zunächst wieder die beiden Planetenzahnräder 17, 18 und das Abtriebshohlrad 19. Auch das auf der Antriebswelle sitzende Antriebsritzel 21 der Getriebeeinheit 5 wird in **Fig. 5** teilweise sichtbar. In **Fig. 5** ferner gut ersichtlich sind die insgesamt vier Planetenträger 22, 23 und 24, 25, über welche die beiden Planetenzahnräder 17, 18 so geführt werden, dass die Planetenzahnräder 17, 18 jederzeit im Eingriff sowohl mit dem Antriebsritzel 21 als auch mit dem Abtriebshohlrad 19 stehen, und zwar auch dann, wenn die Antriebswelle 11 mit dem Antriebsritzel 21 und das Fahrzeugrad 1 mit dem Abtriebshohlrad 19 beim Einfedern vertikale Relativbewegungen 9 zueinander ausführen, wie dies im Detail in den **Fig. 7** bis **9** dargestellt ist.

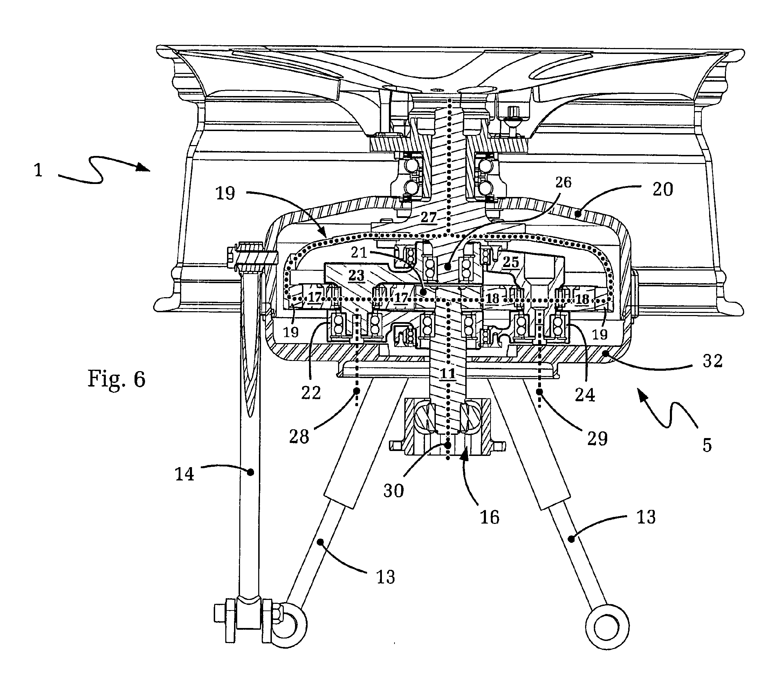

Die Planetenträger 22, 23 und 24, 25 gemäß **Fig. 5** sind bei der dargestellten Ausführungsform im Wesentlichen als Schwenkhebel mit jeweils zwei Lagerstellen ausgebildet. Wie insbesondere aus einer Zusammenschau der **Fig. 5** und 6 hervorgeht, sind die beiden zeichnungsbezogen vorderen Planetenträger 22, 23 dabei koaxial auf der Antriebswelle 11 gelagert, während die beiden zeichnungsbezogen hinteren Planetenträger 24, 25 im Innenraum des Abtriebshohlrads 19 koaxial auf einem mit dem Abtriebshohlrad 19 verbundenen Achsstummel 26 gelagert sind, der wiederum einstückig mit der Radnabe 27 ausgebildet ist.

Die jeweilige Achsen 28, 29 der beiden Planetenräder 17, 18 bildet dabei gleichzeitig jeweils die beiden gemeinsamen Planetenachsen 28, 29 für die - dem Planetenzahnrad 17 bzw. 18 jeweils zugeordneten - beiden Planetenträger 22, 23 bzw. 24, 25. Somit sorgt jeweils der erste einem Planetenzahnrad 17, 18 zugeordnete Planetenträger 22 bzw. 24 für einen konstanten Abstand und Zahneingriff zwischen Antriebsritzel 21 und Planetenzahnrad 17 bzw. 18, während der zweite - demselben Planetenzahnrad 17 bzw. 18 zugeordnete - Planetenträger 23 bzw. 25 für einen konstanten Abstand und Zahneingriff zwischen Planetenzahnrad 17 bzw. 18 und Abtriebshohlrad 19 sorgt.

Dies bedeutet somit, dass Antriebswelle 11 und Radachse bzw. Abtriebshohlrad 19 gemäß **Fig. 5** eine transversale Bewegung 9 in der zeichnungsbezogen vertikalen Richtung gegeneinander ausführen können (vgl. Doppelpfeil 9), wobei gleichzeitig der Zahneingriff aller vier Zahnräder 21, 17, 18, 19 und damit die volle Drehmomentübertragung zwischen Antriebswelle 11 und Abtriebshohlrad 19 stets erhalten bleibt. Das Rad 1 mit dem Radträger bzw. Getriebegehäuse 20 kann somit wieder die vertikalen Einfederungsbewegungen 9 ausführen, während die Antriebswelle 11 und damit der Antriebsmotor 6 (vgl. **Fig. 1**) im wesentlichen starr mit dem Fahrzeugchassis verbunden sein können, und demnach mit Vorteil zu den gefederten Massen des Kraftfahrzeugs zählen.

Der Kraftfluss des Antriebsdrehmoments erfolgt bei der Getriebeeinheit somit ausgehend von der Antriebswelle 11 über das mit der Antriebswelle 11 fest verbundene Antriebsritzel 21, von dort auf die beiden Planetenzahnräder 17, 18; und von den Planetenzahnrädern 17, 18 wiederum auf das mit dem Fahrzeugrad 1 fest verbundene Abtriebshohlrad 19. Letzteres geht insbesondere auch aus einer Zusammenschau von **Fig. 5** mit der Schnittdarstellung in **Fig. 6** hervor, wobei der Kraftfluss in der Darstellung von **Fig. 6** mittels einer punktierten Linie 30 angedeutet ist. Der Kraftfluss 30 bleibt dabei wie beschrieben unverändert erhalten unabhängig davon, wie die Antriebswelle 11 mit dem Antriebsritzel 21 in vertikaler Richtung gegenüber dem Fahrzeugrad 1 relativbewegt wird, vgl. strichlierter Doppelpfeil 9 in **Fig. 5** bzw. Darstellung der Relativbewegung zwischen Fahrzeugrad 1 und Antriebswelle 11 bzw. Antriebsritzel 21 in **Fig. 7** bis **9****.**

**Fig. 6** zeigt den Radnabenantrieb mit der Getriebeeinheit 5 gemäß **Fig. 4** und **5** im Längsschnitt entlang der Radachse bzw. Radnabe 27. Die Radnabe 27 bildet dabei gleichzeitig die Abtriebswelle der Getriebeeinheit 5, und befindet sich bei der Getriebestellung gemäß **Fig. 4** bis **6** und **9** in koaxialer Relativposition bezüglich der Antriebswelle 11 der Getriebeeinheit 5. In der Schnittdarstellung der **Fig. 6** ferner gut erkennbar ist wieder das Gehäuse 20 der Getriebeeinheit 5, welches gleichzeitig den Radträger darstellt und somit auch die Angriffspunkte für die Radführungslenker 13, 14, 15 gemäß **Fig. 3** und **4** trägt.

Unmittelbar innerhalb der Gehäusewandung 20 der Getriebeeinheit 5 ist in **Fig. 6** das Abtriebshohlrad 19 erkennbar, das drehfest mit der Radnabe 27 des angetriebenen Rades 1 verbunden ist. Innerhalb des Hohlrades 19 sind die geschnitten dargestellten Planetenzahnräder 17, 18 erkennbar. Die beiden Planetenzahnräder 17, 18 werden mittels des ersten Paares aus Planetenträgern 22, 24 im Zahneingriff mit dem Antriebsritzel 21, und gleichzeitig mittels des zweiten Paares aus Planetenträgern 23, 25 auf der schwenkbaren Planetenposition 33 (vgl. Bogensegment 33 in **Fig. 7** bis **9**) sowie im Zahneingriff mit dem Abtriebshohlrad 19 gehalten.

Aus der Zusammenschau zwischen **Fig. 5** und **Fig. 6** wird auch die konstruktive Ausformung der vier Planetenträger 22, 23, 24, 25 ersichtlich, welche in **Fig. 6** der besseren Erkennbarkeit halber fett umrandet dargestellt sind. Insbesondere in **Fig. 6** erkennt man, dass die Achsen 28, 29 der beiden Planetenräder 17, 18 jeweils durch Fortsätze der beiden radseitigen Planetenträger 23, 25 gebildet sind, wobei die Achsen bzw. Fortsätze jeweils einstückig mit dem jeweiligen Planetenträger 23, 25 ausgeformt sind. Hierdurch ergibt sich insbesondere eine in Axialrichtung besonders kompakte Bauweise sowie eine hohe Drehmomentsteifigkeit der Getriebeeinheit 1.

Ferner erkennt man insbesondere in der Schnittdarstellung von **Fig. 6****,** dass die beiden das zeichnungsbezogen linke Planetenzahnrad 17 führenden Planetenträger 22, 23 jeweils unmittelbar auf der Antriebswelle 11 bzw. auf dem Achsstummel 26 des Abtriebshohlrads 19 gelagert sind, während die beiden anderen, das zeichnungsbezogen rechte Planetenzahnrad 18 führenden Planetenträger 24, 25 ihrerseits jeweils auf den Lagerstellen der ersteren beiden Planetenträger 22, 23 gelagert sind. Auch hierdurch wird wieder eine besonders kompakte Bauweise in der Axialrichtung erzielt und die Steifigkeit der Gesamtanordnung aus den Planetenträgern 22, 23 und 24, 25 erhöht.

Im Fall der dargestellten Relativposition der vier Zahnräder 21, 17, 18, 19 - wenn also beispielsweise im Verlauf einer Einfederungsbewegung 9 Antriebswelle 11 und Abtriebswelle 27 genau koaxial zueinander positioniert sind - kann es unter Umständen zu einer kinematischen Unterbestimmung bezüglich der Position der Planetenzahnräder 17, 18 kommen. In diesem Fall könnten die beiden Planetenzahnräder 17, 18 sowie die vier dann paarweise parallel positionierten Planetenträger 22, 24 und 22, 25 - ähnlich wie in einem Planetengetriebe - um die dann koaxialen Achsen 11, 27 von Antriebswelle 11 und Abtriebshohlrad 19 rotieren, was vorliegend unerwünscht ist, da die Drehmomentübertragung in diesem Fall unterbrochen wäre und das Getriebe 5 so in einen nichtdefinierten Zustand geraten könnte.

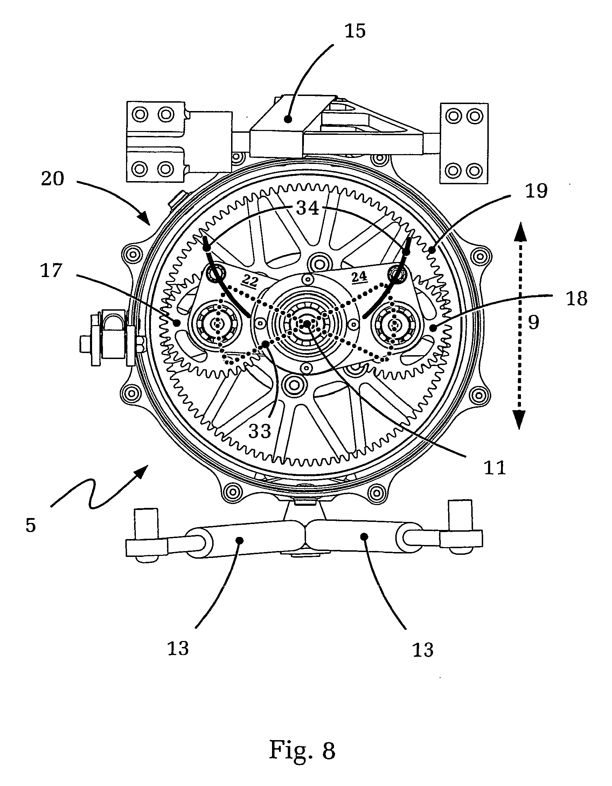

Um diese kinematische Unterbestimmung der Planetenzahnräder 17, 18 in deren in **Fig. 5** dargestellten Relativposition zu unterbinden, sind bei der dargestellten Ausführungsform zwei Verriegelungszapfen 31 an den beiden zeichnungsbezogen vorderen Planetenträgern 22, 24 angeordnet. Die Verriegelungszapfen 31 greifen im unmittelbaren Bereich der in **Fig. 5****,** **6** und **8** dargestellten Einfederungs-Mittelposition der Antriebswelle 11 jeweils in eine geeignet ausgeformte Verriegelungskulisse ein, welche der Übersichtlichkeit halber in **Fig. 5** nicht dargestellt ist. Der ungefähre Verlauf der Verriegelungskulisse ist jedoch in **Fig. 8** angedeutet, siehe dort Bezugsziffer 34.

Durch den Eingriff der Verriegelungszapfen 31 in die - beispielsweise im Gehäusedeckel 32 des Getriebegehäuses 20 angeordnete - Verriegelungskulisse 34 lässt sich sicherstellen, dass die Planetenträger 22, 24 im Bereich der dargestellten Mittelposition der Antriebswelle 11 (vgl. auch **Fig. 8**) ihre Schwenkbewegung - wie bei Einfederungsbewegungen des Rades vorgesehen - nur um die Planetenachsen 28, 29 als Momentanachse, nicht jedoch (nach Art eines Planetengetriebes) eine Rotation um die Antriebswelle 11 ausführen können. Dank der Verriegelungszapfen 31 und deren Eingriff in die entsprechenden Verriegelungskulisse 34 im Gehäusedeckel 32 lässt sich somit die kinematische Unterbestimmung der rotatorischen Position der Planetenzahnräder 17, 18 - in der dargestellten koaxialen Stellung von Antriebswelle 11 und Abtriebswelle 27 - um die Antriebswelle 11 beheben, und die volle Drehmomentübertragung in allen Relativpositionen von Antriebswelle 11 und Abtriebswelle 27 gewährleisten

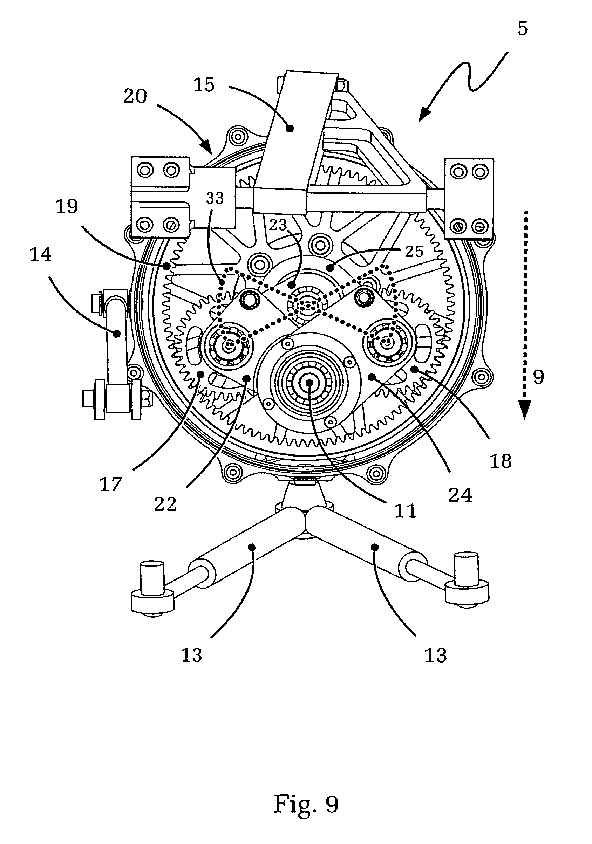

In den **Fig. 7** bis **9** ist der Verlauf einer Einfederungsbewegung 9 des angetriebenen Rades 1 zwischen vollständiger Ausfederung (**Fig. 7**), Neutralstellung (**Fig. 8**) und vollständiger Einfederung (**Fig. 9**) dargestellt. Dabei sind die fahrzeugseitigen Enden der in den **Fig. 7** bis 9 erkennbaren Dreieckslenker 13, 15 sowie des zusätzlichen Spurführungslenkers 14 jeweils chassisfest, während die radseitigen Enden der Radführungslenker 13, 14, 15 jeweils gelenkig am Gehäuse 20 der erfindungsgemäßen Getriebeeinheit angreifen.

In den **Fig. 7** bis **9** gut erkennbar ist die prinzipielle Wirkungsweise der Getriebeeinheit 5 aus Antriebsritzel 21, Planetenzahnrädern 17, 18 und Abtriebshohlrad 19. Dabei ist das Abtriebshohlrad 19 wieder fest mit der Radnabe verbunden, während das (hier von den beiden zeichnungsbezogen vorderen Planetenträgern 22, 24 verdeckte) Antriebsritzel 21 unmittelbar auf der Antriebswelle 11 sitzt, welche bei der hier dargestellten Ausführungsform mit Radführungslenkern 13, 14, 15 über ein Ausgleichsgelenk 16 mit dem Antriebsmotor verbunden ist (vgl. **Fig. 3**). Es ist deutlich ersichtlich, dass die Antriebswelle 11 - unabhängig von den Einfederungsbewegungen 9 des Rades 1 - stets ihre fixe vertikale Relativposition bezüglich des Fahrzeugchassis beibehält, während gleichzeitig permanente Drehmomentübertragung und Zahneingriff zwischen Antriebswelle 11/Antriebsritzel 21 und Hohlrad 19 mittels der jeweils eine Schwenkbewegung 33 um die Radachse 16 ausführenden Planetenzahnräder 17, 18 erfolgt. Der Bereich der Schwenkbewegung der Planetenzahnräder 17, 18 ist in den **Fig. 7** bis **9** durch die punktierten Winkelsegmente 33 angedeutet.

Im Ergebnis wird damit deutlich, dass mit der Erfindung eine Getriebeeinheit geschaffen wird, die bei minimalem Bauraumbedarf eine komplette translatorische Entkopplung zwischen einem Antrieb und einem Abtrieb gewährleisten kann, wobei gleichzeitig die dauerhafte Übertragbarkeit auch hoher Drehmomente bzw. Leistungen sichergestellt werden kann. Dank der Erfindung wird es insbesondere möglich, auch leistungsfähige Radnabenmotoren bezüglich der Einfederungsbewegungen eines angetriebenen Rades von der Radaufhängung vollständig zu entkoppeln, wodurch die ungefederten Massen der Radaufhängung entscheidend reduziert werden können. Zudem lassen sich dank der Erfindung äußerst bauraumsparende Radnabenantriebe bzw. Radaufhängungen für Kraftfahrzeuge aller Art verwirklichen.

Die Erfindung leistet damit einen maßgeblichen Beitrag insbesondere zur Bauraumreduzierung im Antriebsstrang von Kraftfahrzeugantrieben, zur Erweiterung der Einsatzmöglichkeiten und zur Verbesserung des Fahrkomforts von Radnabenantrieben, insbesondere bei Anwendungen im Bereich der elektrischen bzw. Hybridantriebe

### Bezugszeichenliste

| | |
|---|---|
| 1 | Fahrzeugrad |
| 2 | Reifen |
| 3 | Felge |
| 4 | Radnabenantrieb |
| 5 | Getriebeeinheit |
| 6 | Antriebsmotor |
| 7 | Führungsstange |
| 8 | Führungsbuchse |
| 9 | Einfederungsbewegung |
| 10 | Elastomerbalg |
| 11 | Antriebswelle, Motorwelle |
| 12 | Langloch |
| 13 | Querlenker |
| 14 | Spurführungslenker |
| 15 | Querlenker, Dreieckslenker |
| 16 | Wellenausgleichsgelenk |
| 17, 18 | Planetenrad |
| 19 | Hohlrad |
| 20 | Getriebegehäuse |
| 21 | Antriebsritzel |
| 22-25 | Planetenträger |
| 26 | Achsstummel |
| 27 | Abtriebswelle, Radnabe |
| 28, 29 | Planetenachse |
| 30 | Kraftfluss |
| 31 | Verriegelungszapfen |
| 32 | Getriebegehäusedeckel |
| 33 | Verriegelungskulisse |

### Beschreibung für folgende(n) Vertragsstaat(en) : DE

Die Erfindung betrifft eine Getriebeeinheit, insbesondere zum Antrieb eines Fahrzeugrades, wobei Antriebswelle und Abtriebswelle der Getriebeeinheit transversal relativ zueinander bewegbar sind.

Getriebeeinheiten zur Übertragung von Antriebsdrehmomenten, bei denen die Antriebswelle relativ zur Abtriebswelle transversal bzw. translatorisch beweglich ist - sprich, bei denen Antriebs- und Abtriebswelle bei gleichzeitiger Drehmomentübertragung gegeneinander im Wesentlichen parallel verschoben werden können, sind bekannt. Beispiele für derartige Getriebeeinheiten sind Seitenwellen an Radaufhängungen bzw. Kardanwellen, oder auch spezielle Antriebsstränge mit Ketten oder Riemen.

Derartige bekannte Getriebeeinheiten mit translatorischem Bewegungsfreiheitsgrad sind jedoch einerseits aufwändig, und benötigen andererseits einen erheblichen Bauraumumfang - insbesondere in axialer oder radialer Richtung - zur Verwirklichung der transversalen Beweglichkeit der beiden Wellen gegeneinander. Je nach Ausführung sind diese bekannten Getriebeeinheiten zudem auf eine bestimmte, im allgemeinen rotatorische Schwenkbewegung um einen Drehpunkt beschränkt, und ermöglichen damit streng genommen nicht eine rein translatorische Kinematik der Bewegung der beiden Wellen, falls keine Maßnahmen zum Längenausgleich der Kraftübertragungselemente (Riemen, Kette, Kardangelenke) getroffen werden, welche wiederum zusätzlichen konstruktiven Aufwand bedeuten.

Im Beispielfall des Einsatzes derartiger Getriebeeinheiten zum Antrieb der Räder eines Kraftfahrzeugs ist ferner das Gesamtsystem aus Antriebsstrang und Radaufhängung/Radführung zu betrachten, wobei die zur Radführung erforderliche Radaufhängung üblicherweise eine Anzahl von Lenkern aufweist, beispielsweise Längslenker, Schräglenker, Querlenker oder Verbundlenker.

Der zugehörige Antriebsstrang umfasst am Kraftfahrzeug üblicherweise einen Verbrennungsmotor mit angeflanschtem Schaltgetriebe oder Getriebeautomaten, eine oder zwei Antriebswellen und eines oder mehrere Differentiale mit den zugehörigen, zu den Rädern führenden Seitenwellen. Diese Baugruppen - insbesondere soweit sie die Radführungslenker sowie die Seitenwellen umfassen und somit den Radaufhängungen zuzuordnen sind - nehmen einen ganz erheblichen Bauraum im Bereich der Räder des Kraftfahrzeugs ein, welcher für andere Zwecke nicht mehr zur Verfügung steht, und damit den für Fahrgäste, Gepäck oder auch technische Baugruppen zur Verfügung stehenden Platz reduziert.

Dabei können die in einem konventionellen Antriebsstrang enthaltenen Baugruppen, insbesondere die Radführungslenker und die Antriebswellen, nicht beliebig verkleinert bzw. verkürzt werden, da sich hierdurch ungünstige kinematische Verhältnisse bei der Einfederungsbewegung des Rades ergeben würden.

Die Entwicklung bei den Antriebssträngen bzw. Kraftfahrzeugantrieben geht zudem zunehmend in Richtung der Hybridkonzepte. Hierunter fallen insbesondere auch die seriellen Hybride, bei denen keine mechanische Verbindung zwischen dem Verbrennungsmotor und den Antriebsrädern mehr besteht. Stattdessen kann bei einem seriellen Hybrid der Verbrennungsmotor beispielsweise einen Generator antreiben, welcher - ggf. batteriegepuffert - wiederum mit den Antriebsrädern verbundene Elektromotoren speist. Eine ähnliche Konfiguration kann auch bei einem reinen Elektrofahrzeug vorliegen, wobei die Energie hier nicht vom Verbrennungsmotor, sondern von einem elektrischen Energiespeicher geliefert wird; ebenso wie diverse Mischvarianten zwischen dem seriellen Hybrid und dem Elektrofahrzeug angedacht sind oder bereits existieren.

Um die Anzahl der für die Getriebeeinheit benötigten Komponenten sowie deren Bauraumbedarf und Masse möglichst gering zu halten, wird bei solchen Fahrzeugkonzepten teilweise versucht, die elektrischen Fahrmotoren direkt den Rädern zuzuordnen und möglichst nahe an den Rädern, bzw. als Radnabenmotoren in den Rädern selbst unterzubringen. Auf diese Weise können große Teile des konventionellen Antriebsstrangs entfallen, bzw. durch leicht und flexibel zu verlegende elektrische Leitungen zwischen dem Energieerzeuger und den Radnabenmotoren des Kraftfahrzeugs ersetzt werden.

Zusätzlich wurden bereits Anstrengungen unternommen, auch die Radaufhängung selbst mit den zugeordneten Feder/Dämpfereinheiten im Innenraum der Radfelgen bzw. in unmittelbarer Nachbarschaft der Räder unterzubringen, um auf diese Weise noch mehr Bauraum zu gewinnen, der ansonsten bei konventionellen Radaufhängungen für die bekannten Lenkerkonstruktionen erforderlich ist.

Aus der DE 698 06 444 T2 ist eine in die Felge eines Rades integrierbare Radaufhängung bekannt, bei welcher zusätzlich auch beispielsweise elektrische Antriebsmotoren zumindest teilweise im Innenraum der Radfelge untergebracht werden können. Bei dieser bekannten Radaufhängung ist jedoch der elektrische Antriebsmotor jeweils fest am Radträger angeflanscht, weshalb die Masse des Antriebsmotors den ungefederten Massen der Radaufhängung zugeschlagen werden muss. Da die für einen Radnabenantrieb eines Kraftfahrzeugs einsetzbaren Elektromotoren aufgrund der erforderlichen Leistungsfähigkeit eine erhebliche Masse aufweisen, werden hierdurch die ungefederten Massen der Radaufhängung ganz wesentlich vergrößert, worunter der Fahr- und Federungskomfort erheblich leidet, insbesondere da aufgrund der hohen ungefederten Massen viel härtere Stoßdämpfer verbaut werden müssen.

Aus der gattungsbildenden US 2,182,417 ist eine Getriebeeinheit für ein Fahrzeug bekannt, bei der versucht wurde, das Problem einer wünschenswerten transversalen Relativbeweglichkeit von Antriebswelle und Abtriebswelle eines Radnabenantriebs dadurch zu lösen, dass zwischen einem Antriebsritzel und einem auf der Abtriebswelle angeordneten Abtriebshohlrad Planetenzahnräder angeordnet wurden, wobei die Planetenzahnräder über jeweils einen Trägerarm schwenkbar mit der Antriebswelle verbunden sind. Auf diese Weise sollte eine permanente Kraftübertragung vom Antriebsritzel über die Planetenzahnräder auf das Hohlrad ermöglicht werden auch dann, wenn gleichzeitig (beispielsweise durch Einfederungsbewegungen des Rades) transversale Bewegungen zwischen Antriebsritzel und Hohlrad erfolgen.

Die aus dieser Druckschrift bekannte Lehre ist jedoch nachteilig insofern, als die Aufhängung der Planetenzahnräder gemäß der Lehre dieser Druckschrift lediglich über jeweils einen einzigen Trägerarm erfolgt, und zwar in Kombination mit einer bogenförmigen Gleitführung für einen Achsstummel des jeweiligen Planetenzahnrads im Getriebegehäuse. Hierdurch ergibt sich jedoch lediglich eine vergleichsweise instabile und in einigen Positionen zudem kinematisch unterbestimmte Lagerung der Planetenzahnräder, wobei die Planetenzahnräder außerdem nur auf einer Seite gelagert sind, und auf der anderen Seite lediglich fliegend in der Verzahnung des Abtriebshohlrads anliegen.

Mittels dieser aus dem Stand der Technik bekannten Getriebeeinheit lassen sich somit allenfalls geringe Drehmomente übertragen, da andernfalls von einer Überlastung der nur einseitigen Aufhängung der Planetenzahnräder sowie von einem frühzeitigen Ausschlagen der Planetenzahnrad-Gleitführung im Getriebegehäuse auszugehen ist. Auch die für heutige Getriebeverzahnungen erforderliche genaue Einhaltung des Achsabstands der Zahnräder dürfte mit der labilen Aufhängung der Planetenzahnräder gemäß der Lehre dieser Druckschrift nicht für längere Zeit möglich sein. Für die an heutigen Kraftfahrzeugen pro Rad anfallenden Drehmomente bzw. Leistungen ist die Getriebeeinheit gemäß der Lehre dieser Druckschrift somit keinesfalls einsetzbar.

Mit diesem Hintergrund ist es Aufgabe der vorliegenden Erfindung, eine Getriebeeinheit insbesondere für ein Fahrzeugrad zu schaffen, mit welcher die genannten Nachteile des Standes der Technik überwunden werden können. Insbesondere soll die Getriebeeinheit auf kleinstem Raum eine transversale bzw. translatorische Entkopplung zwischen einer Antriebswelle und einer Abtriebswelle ermöglichen. Auf diese Weise soll es insbesondere möglich werden, Radnabenmotoren bezüglich der Einfederungsbewegungen eines Rades von der Radaufhängung zu entkoppeln, und auf diese Weise die ungefederten Massen der Radaufhängung massiv zu reduzieren. Dabei soll jedoch zudem eine dauerhafte und sichere Übertragung auch hoher Drehmomente und Leistungen erfolgt können.

Diese Aufgabe wird durch eine Getriebeeinheit mit den Merkmalen des Patentanspruchs 1 gelöst. Bevorzugte Ausführungsformen sind Gegenstand der Unteransprüche.

In für sich genommen zunächst bekannter Weise umfasst die Getriebeeinheit gemäß der vorliegenden Erfindung eine Antriebswelle und eine zur Antriebswelle in paralleler Richtung angeordnete Abtriebswelle. Dabei ist auf der Antriebswelle ein Antriebsritzel und auf der Abtriebswelle ein Abtriebshohlrad angeordnet. In an sich ebenfalls bekannter Weise sind Antriebswelle und Abtriebswelle parallel zueinander - also in senkrechter Richtung zu ihren jeweiligen Rotationsachsen - translatorisch gegeneinander bewegbar, um auf diese Weise translatorische bzw. transversale Verschiebungen zwischen Antriebswelle und Abtriebswelle - bei gleichzeitiger Drehmomentübertragung - ausgleichen zu können. Zu diesem Zweck weist die Getriebeeinheit zunächst einmal zumindest ein Planetenzahnrad auf, welches sowohl mit dem Antriebsritzel als auch mit dem Abtriebshohlrad in Eingriff steht und auf einer Planetenachse eines Planetenträgers gelagert ist. Der Planetenträger wiederum ist koaxial zum Antriebsritzel bzw. koaxial zur Antriebswelle gelagert.

Erfindungsgemäß jedoch zeichnet sich die Getriebeeinheit durch einen dem Planetenzahnrad ebenfalls zugeordneten zweiten Planetenträger aus, welchem dieselbe, das Planetenzahnrad tragende Planetenachse zugeordnet ist wie dem ersten Planetenträger. Dabei ist das Planetenzahnrad in Axialrichtung zwischen dem ersten Planetenträger und dem zweiten Planetenträger angeordnet, und der zweite Planetenträger ist koaxial zum Abtriebshohlrad gelagert.

Dies bedeutet mit anderen Worten zunächst einmal, dass erfindungsgemäß beide Enden der Achse des Planetenzahnrads jeweils in einem eigenen Planetenträger gehaltert sind. Das Planetenzahnrad ist somit nicht - wie beim Stand der Technik - nur fliegend auf einer Seite gelagert, während die andere Seite im Stand der Technik entweder gar nicht oder lediglich in einer instabilen Gleitführung im Getriebegehäuse gelagert ist.

Auf diese Weise wird das Planetenzahnrad also erfindungsgemäß durch die beiden Planetenträger - die mittels ihrer gemeinsamen Planetenachse miteinander schwenkbeweglich gekoppelt sind - stets so, geführt, dass das Planetenzahnrad sowohl mit dem Antriebsritzel als auch mit dem Abtriebshohlrad in permanentem Eingriff steht. Dabei sorgt der erste Planetenträger, der koaxial zur Antriebswelle gelagert ist, dafür, dass das Planetenzahnrad mit dem Antriebsritzel in Eingriff bleibt, während der zweite Planetenträger, der koaxial zum Abtriebshohlrad gelagert ist, dafür sorgt, dass das Planetenzahnrad permanent mit dem Abtriebshohlrad in Eingriff bleibt.

Vorteilhaft ist es dabei zunächst einmal, dass die Getriebeeinheit äußerst kompakt ausgebildet werden kann, da sie prinzipiell ebenso wenig Raum beansprucht wie beispielsweise ein konventionelles Planetengetriebe. Im Vergleich zu anderen aus dem Stand der Technik bekannten Antriebssträngen mit translatorischem Freiheitsgrad - wie beispielsweise Seiten- bzw. Kardanwellen - ergibt sich somit ein massiv reduzierter Bauraumbedarf, der lediglich einem Bruchteil des Bauraumbedarfs anderer bekannter Lösungen mit jeweils vergleichbarer Drehmomentbelastbarkeit entspricht.

Die erfindungsgemäße Getriebeeinheit kommt damit auf den ersten Blick einem Planetengetriebe nahe, wobei das Antriebsritzel dem Sonnenrad, das Planetenzahnrad einem Planetenzahnrad des Planetengetriebes und das Abtriebshohlrad dem Hohlrad des Planetengetriebes entspricht. Im Unterschied zu einem Planetengetriebe (wie auch im Unterschied zu dem oben genannten Stand der Technik) wird das Planetenzahnrad bei der erfindungsgemäßen Getriebeeinheit jedoch nicht nur durch einen, sondern durch zwei separate, jedoch miteinander schwenkbeweglich gekoppelte Planetenträger geführt, wobei der erste Planetenträger koaxial zur Antriebswelle und der zweite Planetenträger koaxial zum Abtriebshohlrad gelagert ist, wobei das Planetenzahnrad in Axialrichtung zwischen den beiden Planetenträgern angeordnet ist, und wobei die beiden Planetenträger zur gegenseitigem Kopplung eine gemeinsame Planetenachse aufweisen, die wiederum mit der Achse des Planetenzahnrads zusammenfällt.

Im Unterschied beispielsweise zu einem konventionellen Planetengetriebe findet bei der Getriebeeinheit also keine umlaufende Rotation der Planetenträger und des Planetenzahnrads um die zentrale Aufhängung (dort am Sonnenrad) statt. Vielmehr dienen die beiden Planetenträger der erfindungsgemäßen Getriebeeinheit dazu, eine koordinierte Schwenkbewegung des Planetenzahnrads sowohl und gleichzeitig um die Drehachse der Antriebswelle als auch um die Drehachse des Abtriebshohlrads - bei gleichzeitigem permanentem Eingriff des Planetenzahnrads sowohl mit dem Antriebsritzel als auch mit dem Abtriebshohlrad - zu gewährleisten.

Auf diese Weise ergibt sich der erfindungsgemäße Vorteil, dass Antriebswelle und Abtriebswelle mit Antriebsritzel und Abtriebshohlrad translatorisch gegeneinander parallelverschoben werden können, wobei gleichzeitig die Übertragbarkeit hoher Drehmomente zwischen Antriebsritzel und Abtriebshohlrad - unabhängig von der Parallelverschiebung von Antriebswelle und Abtriebswelle - erhalten bleibt.

Der Erfindung liegt somit primär die Erkenntnis zugrunde, dass - insbesondere bei der Verwendung eines Hohlrads als Abtriebshohlrad - ein zweiter Planetenträger so im Hohlrad angeordnet und koaxial zum Hohlrad gelagert werden kann, dass das Planetenzahnrad in dem die Planetenachse bildenden Schnittpunkt der beiden Planetenträger, sowie axial zwischen den beiden Planetenträgern, angeordnet werden kann. Auf diese Weise ergibt sich eine außerordentliche Steifigkeit der Lagerung des Planetenzahnrads, indem dessen Achse permanent an beiden Enden abgestützt wird. Zudem kann die anfällige, nicht effektive und wenig belastbare Lagerung der Achse des Planetenzahnrads in der aus dem Stand der Technik bekannten bogenförmigen Gleitbahn im Getriebegehäuse entfallen. Insgesamt lassen sich mit der erfindungsgemäßen Getriebeeinheit - im Gegensatz zu dem oben genannten Stand der Technik - somit auch Leistungen bzw. Drehmomente übertragen, wie sie insbesondere an den Rädern heutiger Kraftfahrzeuge üblich sind.

Gemäß der Erfindung ist die den beiden Planetenträgern gemeinsame Planetenachse zudem einstückig mit dem ersten oder mit dem zweiten Planetenträger ausgebildet. Auf diese Weise ergibt sich eine weitere Erhöhung der Steifigkeit der Lagerung des Planetenzahnrads, die Herstellungs- und Montagekosten können verringert werden, und zudem lässt sich der axiale Platzbedarf der Getriebeeinheit minimieren.

Die Erfindung wird unabhängig davon verwirklicht, wie die Lagerung der beiden Planetenträger konstruktiv ausgebildet ist, solange die Lagerung der beiden Planetenträger koaxial zur Antriebswelle bzw. zur Abtriebswelle erfolgt. Gemäß einer besonders bevorzugten Ausführungsform ist der erste Planetenträger jedoch unmittelbar auf der Antriebswelle und der zweite Planetenträger im Hohlrad unmittelbar auf der Abtriebswelle gelagert.

Diese Anordnung hat den Vorteil eines minimalen, insbesondere axialen Platzbedarfs, indem fast die gesamte Getriebeeinheit im Innenraum des Hohlrads angeordnet werden kann.

Prinzipiell lässt sich die Erfindung weitgehend unabhängig von Größen und Zähnezahlverhältnissen zwischen Antriebsritzel, Planetenzahnrad und Abtriebshohlrad verwirklichen, solange der Zahnradeingriff gewährleistet ist. Gemäß einer besonders bevorzugten Ausführumgsform der Erfindung jedoch weisen der erste Planetenträger und der zweite Planetenträger denselben Wirkradius auf. Dies bedeutet mit anderen Worten, dass der radiale Abstand zwischen der Antriebswelle und der Achse des Planetenzahnrads mit dem radialen Abstand zwischen der Abtriebswelle und der Achse des Planetenzahnrads übereinstimmt, somit die Achse des Planetenzahnrads also von der Antriebswelle denselben Abstand wie von der Abtriebswelle aufweist.

Diese Ausführungsform ist vorteilhaft insofern, als auf diese Weise der maximale Achsversatz bzw. die maximale translatorische Bewegungsfreiheit zwischen Antriebswelle und Abtriebswelle erreicht wird. Überdies ergibt sich dabei der weitere Vorteil in der Form, dass durch beliebige translatorische Bewegungen zwischen Antriebswelle und Abtriebswelle im Rahmen der Bewegungsfreiheit der erfindungsgemäßen Getriebeeinheit aus geometrischen Gründen keinerlei Drehzahlfehler zwischen Antriebswelle und Abtriebswelle induziert werden. Dies hängt damit zusammen, dass die in diesem Fall den gleichen Wirkradius aufweisenden Planetenträger der Getriebeeinheit bei jeder Transversalbewegung grundsätzlich um dasselbe Winkelmaß verschwenkt werden, wodurch induzierte Drehwinkel bzw. Drehzahlfehler nur innerhalb der Getriebeeinheit auftreten, sich nach außen jedoch vollständig ausgleichen.

Gemäß einer weiteren, besonders bevorzugten Ausführungsform der Erfindung sind die Planetenträger lediglich als jeweils zwei Lagerstellen umfassende Schwenkhebel ausgebildet. Auch diese Ausführungsform steht im Dienst einer besonders kompakten Ausführung der erfindungsgemäßen Getriebeeinheit. Bei dieser Ausführungsform sind die Planetenträger somit funktionsgemäß auf ihre Aufgabe reduziert, das Planetenzahnrad der Getriebeeinheit mit der Antriebswelle sowie mit der Abtriebswelle zu verbinden, bzw. relativ zur Antriebswelle und zur Abtriebswelle schwenkbar zu lagern, und gleichzeitig den korrekten Abstand zwischen Planetenzahnrad und Antriebsritzel sowie zwischen Planetenzahnrad und Abtriebshohlrad und damit den Zahneingriff auch bei Transversalbewegungen zu gewährleisten.

Gemäß einer besonders bevorzugten Ausführungsform der Erfindung umfasst die Getriebeeinheit zwei Planetenzahnräder und vier Planetenträger. Dabei ist jedem Planetenzahnrad ein Paar aus einem ersten Planetenträger und einem zweiten Planetenträger zugeordnet. Bei dieser Ausführungsform ergibt sich eine noch höhere Leistungs- und Drehmomentübertragung mittels der beiden Planetenzahnräder, wobei die beiden Planetenzahnräder in der Neutralstellung der Getriebeeinheit bezüglich der Antriebswelle vorzugsweise einander gegenüber angeordnet sind. Aufgrund der dadurch bedingten zumindest teilweisen Aufhebung der radialen Verzahnungskräfte auf die beiden Planetenzahnräder ergibt sich bei dieser Ausführungsform zudem eine gegenseitige Abstützung der beiden Planetenzahnräder zwischen Antriebsritzel und Hohlrad, und damit insgesamt eine noch bessere Steifigkeit der Zahnradanordnung der Getriebeeinheit.

Vorzugsweise sind dabei die dem zweiten Planetenzahnrad zugeordneten beiden Planetenträger jeweils koaxial auf den beiden Planetenträgern gelagert, die dem ersten Planetenzahnrad zugeordnet sind. Durch diese koaxiale Lagerung der dem zweiten Planetenzahnrad zugeordneten Planetenträger auf den dem ersten Planetenzahnrad zugeordneten Planetenträger wird axialer Bauraum eingespart, und es ergibt sich zudem eine Lagerung mit hoher Gesamtsteifigkeit bezüglich der hier aus vier Planetenträgern bestehenden Planetenträgeranordnung.

Gemäß einer weiteren bevorzugten Ausführungsform ist vorgesehen, dass die Getriebeeinheit als Radantrieb ausgebildet wird und in eine Radfelge integriert ist, wobei das Abtriebshohlrad gleichzeitig unmittelbar mit der Radnabe verbunden ist. Vorzugsweise ist die Getriebeeinheit dabei zudem als Radnabenantrieb ausgebildet und unmittelbar mit einem Antriebsmotor verbunden.

Auf diese Weise lässt sich ein äußerst kompakter Radnabenantrieb darstellen, der zunächst einmal den entscheidenden Vorteil aufweist, vertikale Einfederungsbewegungen eines angetriebenen Rades vollkommen unbeeinträchtigt zuzulassen, ohne dass hierzu übliche Antriebsglieder wie Seitenwellen oder Kettentriebe notwendig wären. Vielmehr ermöglicht die erfindungsgemäße Getriebeeinheit in dieser Ausführungsform eine freie - insbesondere vertikale - Einfederungsbewegung des angetriebenen Rades, wobei gleichzeitig die in der Radnabe entspringende Antriebswelle des Rades der vertikalen Bewegung des Rades nicht folgt, sondern in vertikaler Richtung vielmehr fahrzeugbezogen festgelegt sein kann. Die Antriebswelle des Rades kann somit - ohne Zwischenschaltung von Seitenwellen - beispielsweise direkt am Fahrzeugchassis gelagert bzw. direkt mit einem Achs- oder Radantrieb verbunden werden.

Im Fall der Ausführung der erfindungsgemäßen Getriebeeinheit als Radnabenantrieb mit unmittelbar angeschlossenem Antriebsmotor ergibt sich zudem der entscheidende Vorteil, dass der Antriebsmotor - obwohl zum Beispiel unmittelbar an der Radnabe angeordnet - nicht fest mit der Radnabe bzw. mit dem Radträger verbunden sein muss, sondern bezüglich der Einfederungsbewegung des Rades von diesem vollständig entkoppelt werden kann. Dies bedeutet mit anderen Worten, dass der Antriebsmotor eines die erfindungsgemäße Getriebeeinheit umfassenden Radnabenantriebs insbesondere karosserie- bzw. chassisfest angeordnet werden kann, während das angetriebene Rad vom Antrieb unbeeinflusst seine Einfederungsbewegungen ausführen kann. Auf diese Weise wird der Nachteil der aus dem Stand der Technik bekannten Radnabenantriebe, bei denen der Antriebsmotor den ungefederten Massen der Radaufhängungen zugeschlagen ist, beseitigt. Es wird somit dank der Erfindung möglich, einen drehmomentbeständigen Radnabenantrieb darzustellen, der einen mit einer üblichen Radaufhängung vergleichbaren Federungskomfort bietet.

Als Antriebsmotoren des Radnabenantriebs können im Prinzip beliebige Motoren herangezogen werden. Zu denken ist hier beispielsweise auch an Hydraulikmotoren. Insbesondere mit dem Hintergrund des Einsatzes der erfindungsgemäßen Getriebeeinheit im Bereich der Personenkraftwagen mit Elektro- bzw. Hybridantrieb ist gemäß einer besonders bevorzugten Ausführungsform der Erfindung jedoch vorgesehen, dass es sich bei dem Antriebsmotor des Radnabenantriebs um einen Elektromotor handelt.

Auf diese Weise wird ein höchst kompakter elektrischer Radnabenantrieb erhalten, der beispielsweise durch den von einer Batterie bzw. von einem Verbrennungsmotor mit Generator erzeugten Strom gespeist werden kann.

Dabei bildet vorzugsweise die Motorwelle des Antriebsmotors unmittelbar die Antriebswelle, und das Antriebsritzel der Getriebeeinheit ist direkt auf der Motorwelle angeordnet. Auf diese Weise lässt sich der Antriebsmotor unmittelbar am angetriebenen Rad, bzw. je nach Form und Größe des Antriebsmotors und der Felge sogar innerhalb der Radfelge anordnen.

Gemäß einer weiteren, besonders bevorzugten Ausführungsform der Erfindung ist die Getriebeeinheit in einem Radträger angeordnet, der zugleich als Getriebegehäuse ausgebildet ist. Hierdurch wird eine besonders kompakte und robuste Ausführung der als Radnabenantrieb ausgebildeten Getriebeeinheit erreicht, indem die Zahnräder der Getriebeeinheit im Innenraum des als Getriebegehäuse ausgebildeten Radträgers angeordnet werden können.

Insbesondere mit dem Hintergrund eines unmittelbar an eine erfindungsgemäße Getriebeeinheit angeflanschten Antriebsmotors ist vorzugsweise ein elastischer Faltenbalg mit radialem bzw. transversalem Bewegungsfreiheitsgrad zwischen der Wellenseite des Antriebsmotors und der Getriebeeinheit vorgesehen. Auf diese Weise können die beim Einfedern des Rades entstehenden Relativbewegungen zwischen Rad und Getriebeeinheit einerseits und dem am Fahrzeugchassis angeordneten Antriebsmotor ausgeglichen werden, wobei die Antriebswelle des Motors und die Getriebeeinheit gleichzeitig vor Umgebungseinflüssen geschützt sind.

Die Verwirklichung der Erfindung ist zunächst einmal unabhängig von der konstruktiven Darstellung der transversalen Relativbeweglichkeit zwischen Antriebswelle und Abtriebswelle. Die transversale Relativbeweglichkeit der Getriebeeinheit kann - im Beispielfall der Anwendung bei einer Radaufhängung - beispielsweise mittels einer für sich genommen bekannten Lenkeranordnung realisiert werden.

Gemäß einer alternativen Ausführungsform der Erfindung weist die Getriebeeinheit jedoch eine Linearführung auf, bzw. ist mit einer Linearführung verbunden. Mittels der Linearführung wird eine rein lineare translatorische bzw. transversale Relativbewegung zwischen Antriebswelle und Abtriebswelle gewährleistet, der Bewegungsfreiheitsgrad zwischen Antriebswelle und Abtriebswelle ist somit entsprechend auf die gewünschte translatorische Bewegung eingeschränkt. Eine derartige Linearführung ist vorteilhaft insofern, als sie im Vergleich mit Lenkeranordnungen lediglich ein Minimum an (axialem) Bauraum beansprucht, was insbesondere bei Radaufhängungen von Bedeutung sein kann, bei denen die Linearführung der Getriebeeinheit somit einerseits die lineare transversale Beweglichkeit zwischen Antriebswelle und Abtriebswelle gewährleistet, wie auch andererseits die Radaufhängung selbst bildet.

Dabei können Lagergehäuse für die Lagerbuchsen der Linearführung beispielsweise einstückig mit dem Radträger ausgebildet oder unmittelbar mit dem Radträger verbunden sein. Auf diese Weise kann der Radträger nicht nur die Aufgaben der Führung und Lagerung des Rades und der Kapselung der erfindungsgemäßen Getriebeeinheit übernehmen, sondern bildet zudem auch den beweglichen Teil der Radaufhängung. Mit anderen Worten bedeutet dies, dass die Lagergehäuse der Linearführung, in denen beispielsweise die Gleitflächen oder Lagerbuchsen der Linearführung angeordnet sind, in einem Stück mit dem Radträger ausgebildet oder unmittelbar mit dem Radträger verbunden werden können, was eine verwindungssteife und leichte Konstruktion der Radaufhängung ermöglicht.

Insbesondere für den Fall der Ausbildung der Getriebeeinheit als kompakter Radnabenantrieb, der gleichzeitig auch die beschriebene Linearführung zur Aufhängung des Rades umfasst, lässt sich somit der Bauraumbedarf für ein angetriebenes Rad eines Kraftfahrzeugs einschließlich dessen Antrieb und Aufhängung entscheidend verringern - ggf. auf einen Bruchteil des bei konventionellen Antriebssträngen und Radaufhängungen benötigten Bauraums.

Bei höheren Anforderungen an die Kinematik einer Radaufhängung, beispielsweise bei sportlicheren Fahrzeugen, kann die erfindungsgemäße Getriebeeinheit als Radträger und Teil eines Radnabenantriebs jedoch auch mittels einer Lenkeranordnung am Fahrzeugchassis angeordnet werden. Mit diesem Hintergrund sieht eine weitere Ausführungsform der Erfindung vor, dass zwischen dem Antriebsritzel der Getriebeeinheit und dem Antriebsmotor des Radnabenantriebs zumindest ein Wellen-Ausgleichsgelenk angeordnet ist. Mit diesem Ausgleichsgelenk lassen sich die geringfügigen axialen Längenveränderungen und geringfügigen Winkeldifferenzen ausgleichen, die beim Einfedern des Fahrzeugrades auftreten können, wenn das Rad nicht mittels einer Linearführung, sondern mittels einer Anordnung aus Radführungslenkern mit dem Fahrzeugchassis verbunden ist.

Um die sichere Drehmomentübertragung in allen Betriebszuständen der Getriebeeinheit zu gewährleisten, ist es gemäß einer weiteren Ausführungsform der Erfindung vorgesehen, dass an zumindest einem der Planetenträger eine Verdrehsicherung angeordnet ist. Die Verdrehsicherung ist dabei so ausgebildet, dass in der Neutralstellung der Getriebeeinheit, also bei axialer Überdeckung von Antriebswelle und Abtriebswelle, eine ansonsten mögliche Rotation der Planetenträger und damit auch der Planetenzahnräder um die sich in diesem Fall überdeckenden Achsen von Antriebswelle und Abtriebswelle, und damit eine Unterbrechung der Drehmomentübertragung, unterbunden wird.

Für den Fachmann wird nach dem Gesagten erkennbar, dass das kinematische Prinzip der Erfindung nicht auf Zahnradgetriebe beschränkt ist. Mit diesem Hintergrund ist es gemäß einer alternativen Ausführungsform der Erfindung vorgesehen, dass die Getriebeeinheit anstelle der Zahnräder Reibräder aufweist, deren Durchmesserverhältnisse insbesondere proportional zu den Zähnezahlverhältnissen der Zahnräder der Getriebeeinheit gewählt werden können.

Im Folgenden wird die Erfindung anhand lediglich Ausführungsbeispiele darstellender Zeichnungen näher erläutert. Dabei zeigt:
- **Fig. 1**: in isometrischer Darstellung eine Ausführungsform einer erfindungsgemäßen, hier in einen Radnabenantrieb mit Linearführung integrierten Getriebeeinheit;
- **Fig. 2**: den Radnabenantrieb mit Getriebeeinheit gemäß **Fig. 1** bei demontiertem Antriebsmotor;
- **Fig. 3**: in einer **Fig. 1** und **Fig. 2** entsprechenden Darstellung eine Ausführungsform einer erfindungsgemäßen Getriebeeinheit als Radnabenantrieb mit Lenkeranordnung zur Radführung;
- **Fig. 4**: in einer **Fig. 1** und **Fig. 3** entsprechenden Darstellung den Radnabenantrieb mit Getriebeeinheit gemäß **Fig. 3** mit abgenommenem Getriebegehäusedeckel;
- **Fig. 5**: die Getriebeeinheit des Radnabenantriebs gemäß **Fig. 3** und **4** in einer Ausschnittsvergrößerung;
- **Fig. 6**: den Radnabenantrieb mit Getriebeeinheit gemäß **Fig. 3** bis **5** im Axialschnitt;
- **Fig. 7**: den Radnabenantrieb mit Getriebeeinheit gemäß **Fig. 3** bis **6** in schematischer Seitenansicht, Rad in vollständig ausgefedertem Zustand;
- **Fig. 8**: den Radnabenantrieb mit Getriebeeinheit gemäß **Fig. 3** bis 7 in **Fig. 7** entsprechender Ansicht, Rad im neutralen Federungszustand; und
- **Fig. 9**: den Radnabenantrieb mit Getriebeeinheit gemäß **Fig. 3** bis **8** in einer **Fig. 7** und **8** entsprechenden Ansicht, Rad in vollständig eingefedertem Zustand.

**Fig. 1** zeigt in isometrischer Darstellung eine Ausführungsform einer Getriebeeinheit gemäß der vorliegenden Erfindung, die hier als Radnabenantrieb ausgebildet bzw. in einen Radnabenantrieb integriert ist.

Man erkennt zunächst einmal ein Fahrzeugrad 1 mit einem Reifen 2 und einer Felge 3, sowie ferner einen Radnabenantrieb 4 mit einer Getriebeeinheit 5 und einem Antriebsmotor 6. Der dargestellte Radnabenantrieb 4 ist zudem mit einer hier lediglich schematisch dargestellten Linearführung 7, 8 als Radaufhängung ausgestattet, die in der dargestellten Ausführungsform zwei Führungsstangen 7 sowie zwei Lagergehäuse 8 aufweist. Die Lagergehäuse 8 dienen als bzw. enthalten Führungsbuchsen und können somit auf den chassisfesten Führungsstangen 7 in vertikaler Richtung auf und ab gleiten. Ebenfalls zur Radaufhängung gehörige Feder/Dämpfereinheiten sind der besseren Übersichtlichkeit halber in den Figuren nicht dargestellt.

Da der Antriebsmotor 6 (ebenso wie die Führungsstangen 7) fest mit dem (nicht dargestellten) Fahrzeugchassis verbunden ist, während das Rad 1 mit der erfindungsgemäßen Getriebeeinheit 5 vertikale Einfederungsbewegungen 9 ausführen kann, ist zwischen dem Antriebsmotor 6 und der Getriebeeinheit 5 ein in radialer bzw. transversaler Richtung elastischer Faltenbalg 10 angeordnet, der die Antriebswelle 11 bei den Relativbewegungen zwischen Rad 1 und Antriebsmotor 6 vor Verschmutzungen schützt.

**Fig. 2** zeigt den Radnabenantrieb gemäß **Fig. 1** - zur besseren Erkennbarkeit der Getriebeeinheit 5 - bei demontiertem Antriebsmotor 6. Zusätzlich zu den schon in **Fig. 1** dargestellten Elementen wird in **Fig. 2** insbesondere die Antriebswelle 11 der Getriebeeinheit 5 erkennbar. Anhand des schlitzförmigen Langlochs 12 im Gehäuse der Getriebeeinheit 5 wird in **Fig. 2** die transversale Beweglichkeit 9 der Antriebswelle 11 relativ zum Gehäuse der Getriebeeinheit 5 bzw. relativ zu dem angetriebenen Rad 1 angedeutet, siehe strichlierter Doppelpfeil 9 in **Fig. 2****.**

Dies bedeutet, dass die Antriebswelle 11 (sowie der Antriebsmotor 6, dessen Welle hier mit der Antriebswelle 11 identisch ist) ebenso wie die Führungsstangen 7 der Linearführung 7, 8 chassisfest positioniert sind, während die sonstigen Bestandteile der Getriebeeinheit 5, das Gehäuse der Getriebeeinheit sowie das angetriebene Rad 1 vertikale Einfederungsbewegungen 9 ausführen können.

**Fig. 3** zeigt eine weitere Ausführungsform einer erfindungsgemäßen Getriebeeinheit, 5. In **Fig. 3** ist die Getriebeeinheit 5 ebenfalls in einem Radnabenantrieb integriert, wobei die Radaufhängung im Unterschied zu dem Ausführungsbeispiel gemäß **Fig. 1** und **2** nicht mittels einer Linearführung, sondern anhand einer Anordnung aus Radführungslenkern 13, 14, 15 erfolgt. Die Radführungslenker 13, 14, 15 sind für sich genommen in bekannter Weise jeweils an einem Ende elastisch bzw. gelenkig mit dem (nicht dargestellten) Chassis des Kraftfahrzeugs verbunden, während sie mit dem radseitigen Ende ebenfalls elastisch bzw. gelenkig mit der hier gleichzeitig den Radträger bildenden Getriebeeinheit 5 verbunden sind.

Die Aufhängung des Rades 1 mittels einer Lenkeranordnung 13, 14, 15 führt dazu, dass beim Einfedern des Rades 1 - zusätzlich zu den vertikalen und auf die Antriebswelle bezogenen transversalen Bewegungen des Rades 1 - auch geringfügige seitliche bzw. auf die Antriebswelle 11 bezogen axiale Bewegungen des Rades 1 erfolgen. Abhängig von der genauen Geometrie der Radführungslenker 13, 14, 15 kann beim Einfedern zudem auch eine geringfügige Veränderung des Radsturzes erfolgen. Dies bedeutet, dass die Einfederungsbewegung des Rades 1 bei der hier gezeigten Ausführungsform mit Radführungslenkern 13, 14, 15 nicht ausschließlich vertikal bzw. linear erfolgt.

Aus diesem Grund ist bei dieser Ausführungsform zwischen der Antriebswelle 11 der Getriebeeinheit 5 und dem Antriebsmotor (hier nicht dargestellt, vgl. aber **Fig. 1****)** ein Ausgleichsgelenk 16 angeordnet, das den durch die Radführungslenker 13, 14, 15 hervorgerufenen geringfügigen axialen Versatz und etwaige geringfügige Sturz-Winkelabweichungen beim Einfedern des Rades aufnimmt bzw. ausgleicht. Auch hierbei wird der rein vertikale Anteil 9 der Einfederungsbewegung erfindungsgemäß jedoch vollständig innerhalb der Getriebeeinheit 5 aufgenommen und ausgeglichen.

**Fig. 4** zeigt die Getriebeeinheit 5 des Radnabenantriebs gemäß Fig. 3 bei abgenommenem Getriebegehäusedeckel. Man erkennt bereits einige wesentliche Bestandteile der Getriebeeinheit 5, nämlich zwei Planetenzahnräder 17, 18 und das - mit der Radnabe verschraubte - Abtriebshohlrad 19. Umschlossen wird das Abtriebshohlrad 19 von dem zugleich als Getriebegehäuse 20 ausgebildeten Radträger, der gleichzeitig die Gelenkaufnahmen zum Angriff der Radführungslenker 13, 14, 15 bildet bzw. trägt.

Die Getriebeeinheit 5 aus **Fig. 4** ist der besseren Erkennbarkeit halber in Fig. 5 in einher Ausschnittsvergrößerung dargestellt. Man erkennt zunächst wieder die beiden Planetenzahnräder 17, 18 und das Abtriebshohlrad 19. Auch das auf der Antriebswelle sitzende Antriebsritzel 21 der Getriebeeinheit 5 wird in **Fig. 5** teilweise sichtbar. In **Fig. 5** ferner gut ersichtlich sind die insgesamt vier Planetenträger 22, 23 und 24, 25, über welche die beiden Planetenzahnräder 17, 18 so geführt werden, dass die Planetenzahnräder 17, 18 jederzeit im Eingriff sowohl mit dem Antriebsritzel 21 als auch mit dem Abtriebshohlrad 19 stehen, und zwar auch dann, wenn die Antriebswelle 11 mit dem Antriebsritzel 21 und das Fahrzeugrad 1 mit dem Abtriebshohlrad 19 beim Einfedern vertikale Relativbewegungen 9 zueinander ausführen, wie dies im Detail in den **Fig. 7** bis **9** dargestellt ist.

Die Planetenträger 22, 23 und 24, 25 gemäß **Fig. 5** sind bei der dargestellten Ausführungsform im Wesentlichen als Schwenkhebel mit jeweils zwei Lagerstellen ausgebildet. Wie insbesondere aus einer Zusammenschau der **Fig. 5** und 6 hervorgeht, sind die beiden zeichnungsbezogen vorderen Planetenträger 22, 23 dabei koaxial auf der Antriebswelle 11 gelagert, während die beiden zeichnungsbezogen hinteren Planetenträger 24, 25 im Innenraum des Abtriebshohlrads 19 koaxial auf einem mit dem Abtriebshohlrad 19 verbundenen Achsstummel 26 gelagert sind, der wiederum einstückig mit der Radnabe 27 ausgebildet ist.

Die jeweilige Achsen 28, 29 der beiden Planetenräder 17, 18 bildet dabei gleichzeitig jeweils die beiden gemeinsamen Planetenachsen 28, 29 für die - dem Planetenzahnrad 17 bzw. 18 jeweils zugeordneten - beiden Planetenträger 22, 23 bzw. 24, 25. Somit sorgt jeweils der erste einem Planetenzahnrad 17, 18 zugeordnete Planetenträger 22 bzw. 24 für einen konstanten Abstand und Zahneingriff zwischen Antriebsritzel 21 und Planetenzahnrad 17 bzw. 18, während der zweite - demselben Planetenzahnrad 17 bzw. 18 zugeordnete - Planetenträger 23 bzw. 25 für einen konstanten Abstand und Zahneingriff zwischen Planetenzahnrad 17 bzw. 18 und Abtriebshohlrad 19 sorgt.

Dies bedeutet somit, dass Antriebswelle 11 und Radachse bzw. Abtriebshohlrad 19 gemäß **Fig. 5** eine transversale Bewegung 9 in der zeichnungsbezogen vertikalen Richtung gegeneinander ausführen können (vgl. Doppelpfeil 9), wobei gleichzeitig der Zahneingriff aller vier Zahnräder 21, 17, 18, 19 und damit die volle Drehmomentübertragung zwischen Antriebswelle 11 und Abtriebshohlrad 19 stets erhalten bleibt. Das Rad 1 mit dem Radträger bzw. Getriebegehäuse 20 kann somit wieder die vertikalen Einfederungsbewegungen 9 ausführen, während die Antriebswelle 11 und damit der Antriebsmotor 6 (vgl. **Fig. 1**) im wesentlichen starr mit dem Fahrzeugchassis verbunden sein können, und demnach mit Vorteil zu den gefederten Massen des Kraftfahrzeugs zählen.

Der Kraftfluss des Antriebsdrehmoments erfolgt bei der Getriebeeinheit somit ausgehend von der Antriebswelle 11 über das mit der Antriebswelle 11 fest verbundene Antriebsritzel 21, von dort auf die beiden Planetenzahnräder 17, 18; und von den Planetenzahnrädern 17, 18 wiederum auf das mit dem Fahrzeugrad 1 fest verbundene Abtriebshohlrad 19. Letzteres geht insbesondere auch aus einer Zusammenschau von **Fig. 5** mit der Schnittdarstellung in **Fig. 6** hervor, wobei der Kraftfluss in der Darstellung von **Fig. 6** mittels einer punktierten Linie 30 angedeutet ist. Der Kraftfluss 30 bleibt dabei wie beschrieben unverändert erhalten unabhängig davon, wie die Antriebswelle 11 mit dem Antriebsritzel 21 in vertikaler Richtung gegenüber dem Fahrzeugrad 1 relativbewegt wird, vgl. strichlierter Doppelpfeil 9 in **Fig. 5** bzw. Darstellung der Relativbewegung zwischen Fahrzeugrad 1 und Antriebswelle 11 bzw. Antriebsritzel 21 in **Fig. 7** bis **9****.**

**Fig. 6** zeigt den Radnabenantrieb mit der Getriebeeinheit 5 gemäß **Fig. 4** und **5** im Längsschnitt entlang der Radachse bzw. Radnabe 27. Die Radnabe 27 bildet dabei gleichzeitig die Abtriebswelle der Getriebeeinheit 5, und befindet sich bei der Getriebestellung gemäß **Fig. 4** bis **6** und **9** in koaxialer Relativposition bezüglich der Antriebswelle 11 der Getriebeeinheit 5. In der Schnittdarstellung der **Fig. 6** ferner gut erkennbar ist wieder das Gehäuse 20 der Getriebeeinheit 5, welches gleichzeitig den Radträger darstellt und somit auch die Angriffspunkte für die Radführungslenker 13, 14, 15 gemäß **Fig. 3** und **4** trägt.

Unmittelbar innerhalb der Gehäusewandung 20 der Getriebeeinheit 5 ist in **Fig. 6** das Abtriebshohlrad 19 erkennbar, das drehfest mit der Radnabe 27 des angetriebenen Rades 1 verbunden ist. Innerhalb des Hohlrades 19 sind die geschnitten dargestellten Planetenzahnräder 17, 18 erkennbar. Die beiden Planetenzahnräder 17, 18 werden mittels des ersten Paares aus Planetenträgern 22, 24 im Zahneingriff mit dem Antriebsritzel 21, und gleichzeitig mittels des zweiten Paares aus Planetenträgern 23, 25 auf der schwenkbaren Planetenposition 33 (vgl. Bogensegment 33 in **Fig. 7** bis **9****)** sowie im Zahneingriff mit dem Abtriebshohlrad 19 gehalten.

Aus der Zusammenschau zwischen **Fig. 5** und **Fig. 6** wird auch die konstruktive Ausformung der vier Planetenträger 22, 23, 24, 25 ersichtlich, welche in **Fig. 6** der besseren Erkennbarkeit halber fett umrandet dargestellt sind. Insbesondere in **Fig. 6** erkennt man, dass die Achsen 28, 29 der beiden Planetenräder 17, 18 jeweils durch Fortsätze der beiden radseitigen Planetenträger 23, 25 gebildet sind, wobei die Achsen bzw. Fortsätze jeweils einstückig mit dem jeweiligen Planetenträger 23, 25 ausgeformt sind. Hierdurch ergibt sich insbesondere eine in Axialrichtung besonders kompakte Bauweise sowie eine hohe Drehmomentsteifigkeit der Getriebeeinheit 1.

Ferner erkennt man insbesondere in der Schnittdarstellung von **Fig. 6****,** dass die beiden das zeichnungsbezogen linke Planetenzahnrad 17 führenden Planetenträger 22, 23 jeweils unmittelbar auf der Antriebswelle 11 bzw. auf dem Achsstummel 26 des Abtriebshohlrads 19 gelagert sind, während die beiden anderen, das zeichnungsbezogen rechte Planetenzahnrad 18 führenden Planetenträger 24, 25 ihrerseits jeweils auf den Lagerstellen der ersteren beiden Planetenträger 22, 23 gelagert sind. Auch hierdurch wird wieder eine besonders kompakte Bauweise in der Axialrichtung erzielt und die Steifigkeit der Gesamtanordnung aus den Planetenträgern 22, 23 und 24, 25 erhöht.

Im Fall der dargestellten Relativposition der vier Zahnräder 21, 17, 18, 19 - wenn also beispielsweise im Verlauf einer Einfederungsbewegung 9 Antriebswelle 11 und Abtriebswelle 27 genau koaxial zueinander positioniert sind - kann es unter Umständen zu einer kinematischen Unterbestimmung bezüglich der Position der Planetenzahnräder 17, 18 kommen. In diesem Fall könnten die beiden Planetenzahnräder 17, 18 sowie die vier dann paarweise parallel positionierten Planetenträger 22, 24 und 22, 25 - ähnlich wie in einem Planetengetriebe - um die dann koaxialen Achsen 11, 2 7 von Antriebswelle 11 und Abtriebshohlrad 19 rotieren, was vorliegend unerwünscht ist, da die Drehmomentübertragung in diesem Fall unterbrochen wäre und das Getriebe 5 so in einen nichtdefinierten Zustand geraten könnte.

Um diese kinematische Unterbestimmung der Planetenzahnräder 17, 18 in deren in **Fig. 5** dargestellten Relativposition zu unterbinden, sind bei der dargestellten Ausführungsform zwei Verriegelungszapfen 31 an den beiden zeichnungsbezogen vorderen Planetenträgern 22, 24 angeordnet. Die Verriegelungszapfen 31 greifen im unmittelbaren Bereich der in **Fig. 5****,** **6** und **8** dargestellten Einfederungs-Mittelposition der Antriebswelle 11 jeweils in eine geeignet ausgeformte Verriegelungskulisse ein, welche der Übersichtlichkeit halber in **Fig. 5** nicht dargestellt ist. Der ungefähre Verlauf der Verriegelungskulisse ist jedoch in **Fig. 8** angedeutet, siehe dort Bezugsziffer 34.

Durch den Eingriff der Verriegelungszapfen 31 in die - beispielsweise im Gehäusedeckel 32 des Getriebegehäuses 20 angeordnete - Verriegelungskulisse 34 lässt sich sicherstellen, dass die Planetenträger 22, 24 im Bereich der dargestellten Mittelposition der Antriebswelle 11 (vgl. auch **Fig. 8****)** ihre Schwenkbewegung - wie bei Einfederungsbewegungen des Rades vorgesehen - nur um die

Planetenachsen 28, 29 als Momentanachse, nicht jedoch (nach Art eines Planetengetriebes) eine Rotation um die Abtriebswelle 11 ausführen können. Dank der Verriegelungszapfen 31 und deren Eingriff in die entsprechenden Verriegelungskulisse 34 im Gehäusedeckel 32 lässt sich somit die kinematische Unterbestimmung der rotatorischen Position der Planetenzahnräder 17, 18 - in der dargestellten koaxialen Stellung von Antriebswelle 11 und Abtriebswelle 27 -um die Antriebswelle 11 beheben, und die volle Drehmomentübertragung in allen Relativpositionen von Antriebswelle 11 und Abtriebswelle 27 gewährleisten

In den **Fig. 7** bis **9** ist der Verlauf einer Einfederungsbewegung 9 des angetriebenen Rades 1 zwischen vollständiger Ausfederung **(****Fig. 7****),** Neutralstellung **(****Fig. 8****)** und vollständiger Einfederung **(****Fig. 9****)** dargestellt. Dabei sind die fahrzeugseitigen Enden der in den **Fig. 7** bis 9 erkennbaren Dreieckslenker 13, 15 sowie des zusätzlichen Spurführungslenkers 14 jeweils chassisfest, während die radseitigen Enden der Radführungslenker 13, 14, 15 jeweils gelenkig am Gehäuse 20 der erfindungsgemäßen Getriebeeinheit angreifen.

In den **Fig. 7** bis **9** gut erkennbar ist die prinzipielle Wirkungsweise der Getriebeeinheit 5 aus Antriebsritzel 21, Planetenzahnrädern 17, 18 und Abtriebshohlrad 19. Dabei ist das Abtriebshohlrad 19 wieder fest mit der Radnabe verbunden, während das (hier von den beiden zeichnungsbezogen vorderen Planetenträgern 22, 24 verdeckte) Antriebsritzel 21 unmittelbar auf der Antriebswelle 11 sitzt, welche bei der hier dargestellten Ausführungsform mit Radführungslenkern 13, 14, 15 über ein Ausgleichsgelenk 16 mit dem Antriebsmotor verbunden ist (vgl. **Fig. 3****).** Es ist deutlich ersichtlich, dass die Antriebswelle 11 - unabhängig von den Einfederungsbewegungen 9 des Rades 1 - stets ihre fixe vertikale Relativposition bezüglich des Fahrzeugchassis beibehält, während gleichzeitig permanente Drehmomentübertragung und Zahneingriff zwischen Antriebswelle 11/Antriebsritzel 21 und Hohlrad 19 mittels der jeweils eine Schwenkbewegung 33 um die Radachse 16 ausführenden Planetenzahnräder 17, 18 erfolgt. Der Bereich der Schwenkbewegung der Planetenzahnräder 17, 18 ist in den **Fig. 7** bis **9** durch die punktierten Winkelsegmente 33 angedeutet.

Im Ergebnis wird damit deutlich, dass mit der Erfindung eine Getriebeeinheit geschaffen wird, die bei minimalem Bauraumbedarf eine komplette translatorische Entkopplung zwischen einem Antrieb und einem Abtrieb gewährleisten kann, wobei gleichzeitig die dauerhafte Übertragbarkeit auch hoher Drehmomente bzw. Leistungen sichergestellt werden kann. Dank der Erfindung wird es insbesondere möglich, auch leistungsfähige Radnabenmotoren bezüglich der Einfederungsbewegungen eines angetriebenen Rades von der Radaufhängung vollständig zu entkoppeln, wodurch die ungefederten Massen der Radaufhängung entscheidend reduziert werden können. Zudem lassen sich dank der Erfindung äußerst bauraumsparende Radnabenantriebe bzw. Radaufhängungen für Kraftfahrzeuge aller Art verwirklichen.

Die Erfindung leistet damit einen maßgeblichen Beitrag insbesondere zur Bauraumreduzierung im Antriebsstrang von Kraftfahrzeugantrieben, zur Erweiterung der Einsatzmöglichkeiten und zur Verbesserung des Fahrkomforts von Radnabenantrieben, insbesondere bei Anwendungen im Bereich der elektrischen bzw. Hybridantriebe

### Bezugszeichenliste

- 1: Fahrzeugrad
- 2: Reifen
- 3: Felge
- 4: Radnabenantrieb
- 5: Getriebeeinheit
- 6: Antriebsmotor
- 7: Führungsstange
- 8: Führungsbuchse
- 9: Einfederungsbewegung
- 10: Elastomerbalg
- 11: Antriebswelle, Motorwelle
- 12: Langloch
- 13: Querlenker
- 14: Spurführungslenker
- 15: Querlenker, Dreieckslenker
- 16: Wellenausgleichsgelenk
- 17, 18: Planetenrad
- 19: Hohlrad
- 20: Getriebegehäuse
- 21: Antriebsritzel
- 22-25: Planetenträger
- 26: Achsstummel
- 27: Abtriebswelle, Radnabe
- 28, 29: Planetenachse
- 30: Kraftfluss
- 31: Verriegelungszapfen
- 32: Getriebegehäusedeckel
- 33: Verriegelungskulisse

>

## Patentansprüche (Patentansprüche für folgende(n) Vertragsstaat(en): AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, SE, SI, SK, SM, TR)

1. Getriebeeinheit (5) insbesondere für ein Fahrzeugrad, die Getriebeeinheit umfassend eine Antriebswelle (11) mit einem Antriebsritzel (21) und eine Abtriebswelle (27) mit einem Abtriebshohlrad (19), wobei die Achsen von Antriebswelle (11) und Abtriebswelle (27) parallel verlaufen, und wobei Antriebswelle (11) und Abtriebswelle (27) in senkrechter Richtung (9) bezüglich der Rotationsachsen von Antriebswelle (11) und Abtriebswelle (27) transversal gegeneinander bewegbar sind, die Getriebeeinheit (5) aufweisend ein Planetenzahnrad (17), welches mit dem Antriebsritzel (21) und mit dem Abtriebshohlrad (19) in Eingriff steht und auf einer Planetenachse (28) eines Planetenträgers (22) gelagert ist, wobei der Planetenträger (22) koaxial zum Antriebsritzel (21) gelagert ist,
**dadurch gekennzeichnet,**
**dass** die Planetenachse (28) zudem einem zweiten, koaxial zum Abtriebshohlrad (19) gelagerten Planetenträger (23) zugeordnet ist, wobei das Planetenzahnrad (17) in Axialrichtung zwischen dem ersten Planetenträger (22) und dem zweiten Planetenträger (23) angeordnet ist.

2. Getriebeeinheit nach Anspruch 1,
**dadurch gekennzeichnet,**
**dass** die beiden Planetenträgern (22, 23) gemeinsame Planetenachse (28) einstückig mit dem ersten (22) oder dem zweiten Planetenträger (23) ausgebildet ist.

3. Getriebeeinheit nach Anspruch 1 oder 2,
**dadurch gekennzeichnet,**
**dass** der erste Planetenträger (22) auf der Antriebswelle (11) und der zweite Planetenträger (23) im Hohlrad (19) auf der Abtriebswelle (27) gelagert ist.

4. Getriebeeinheit nach einem der Ansprüche 1 bis 3,
**dadurch gekennzeichnet,**
**dass** erster Planetenträger (22) und zweiter Planetenträger (23) denselben Wirkradius aufweisen.

5. Getriebeeinheit nach einem der Ansprüche 1 bis 4,
**dadurch gekennzeichnet,**
**dass** die Planetenträger (22, 23) als jeweils zwei Lagerstellen umfassende Schwenkhebel ausgebildet sind.

6. Getriebeeinheit nach einem der Ansprüche 1 bis 5,
**gekennzeichnet durch**
zwei Planetenzahnräder (17, 18) und vier Planetenträger (22, 23, 24, 25), wobei jedem Planetenzahnrad (17, 18) ein Paar aus einem ersten Planetenträger (22, 24) und einem zweiten Planetenträger (24, 25) zugeordnet ist.

7. Getriebeeinheit nach Anspruch 6,
**dadurch gekennzeichnet,**
**dass** die dem zweiten Planetenzahnrad (18) zugeordneten Planetenträger (24, 25) jeweils koaxial auf den dem ersten Planetenzahnrad (17) zugeordneten Planetenträgern (22, 23) gelagert sind.

8. Getriebeeinheit nach einem der Ansprüche 1 bis 7,
**dadurch gekennzeichnet,**
**dass** die Getriebeeinheit (5) als Radantrieb ausgebildet und in eine Radfelge integriert ist, wobei das Abtriebshohlrad (19) unmittelbar mit der Radnabe (27) verbunden ist.

9. Getriebeeinheit nach Anspruch 8,
**dadurch gekennzeichnet,**
**dass** die Getriebeeinheit (5) als Radnabenantrieb (4) ausgebildet und unmittelbar mit einem Antriebsmotor (6) verbunden ist.

10. Getriebeeinheit nach Anspruch 9,
**dadurch gekennzeichnet,**
**dass** der Antriebsmotor (6) ein Elektromotor ist.

11. Getriebeeinheit nach Anspruch 9 oder 10,
**dadurch gekennzeichnet,**
**dass** die Motorwelle die Antriebswelle (11) der Getriebeeinheit (5) bildet, wobei das Antriebsritzel (21) auf der Motorwelle (11) angeordnet ist.

12. Getriebeeinheit nach einem der Ansprüche 8 bis 11,
**dadurch gekennzeichnet,**
**dass** die Getriebeeinheit (5) in einem als Getriebegehäuse ausgebildeten Radträger (20) angeordnet ist.

13. Getriebeeinheit nach einem der Ansprüche 9 bis 12,
**dadurch gekennzeichnet,**
**dass** zwischen Motorgehäuse (6) und Getriebeeinheit (5) ein Faltenbalg (10) mit transversalem Bewegungsfreiheitsgrad angeordnet ist.

14. Getriebeeinheit nach einem der Ansprüche 1 bis 13,
**gekennzeichnet durch**
eine Linearführung (7, 8) für die transversale Relativbeweglichkeit von Antriebswelle (11) und Abtriebswelle (27).

15. Getriebeeinheit nach einem der Ansprüche 1 bis 13,
**dadurch gekennzeichnet,**
**dass** die Getriebeeinheit (5) mittels einer Radführungslenkeranordnung (13, 14, 15) mit einem Fahrzeugchassis verbunden ist.

16. Getriebeeinheit nach Anspruch 15,
**dadurch gekennzeichnet,**
**dass** zwischen dem Antriebsritzel (21) der Getriebeeinheit (5) und dem Antriebsmotor (6) zumindest ein Wellen-Ausgleichsgelenk (16) angeordnet ist.

17. Getriebeeinheit nach einem der Ansprüche 1 bis 16,
**dadurch gekennzeichnet,**
**dass** an zumindest einem der Planetenträger (22, 24) eine Verdrehsicherung (31, 34) zur Unterbindung der Rotation des Planetenträgers (22, 24) um die Antriebswelle (11) angeordnet ist.

18. Getriebeeinheit nach einem der Ansprüche 1 bis 17,
**dadurch gekennzeichnet,**
**dass** die Getriebeeinheit (5) anstelle der Zahnräder (17, 18, 19, 21) entsprechende Reibräder umfasst.

## Patentansprüche (Patentansprüche für folgende(n) Vertragsstaat(en): DE)

1. Getriebeeinheit (5) insbesondere für ein Fahrzeugrad, die Getriebeeinheit umfassend eine Antriebswelle (11) mit einem Antriebsritzel (21) und eine Abtriebswelle (27) mit einem Abtriebshohlrad (19), wobei die Achsen von Antriebswelle (11) und Abtriebswelle (27) parallel verlaufen, und wobei Antriebswelle (11) und Abtriebswelle (27) in senkrechter Richtung (9) bezüglich der Rotationsachsen von Antriebswelle (11) und Abtriebswelle (27) transversal gegeneinander bewegbar sind, die Getriebeeinheit (5) aufweisend ein Planetenzahnrad (17), welches mit dem Antriebsritzel (21) und mit dem Abtriebshohlrad (19) in Eingriff steht und auf einer Planetenachsen (28) eines Planetenträgers (22) gelagert ist, wobei der Planetenträger (22) koaxial zum Antriebsritzel (21) gelagert ist, **dadurch gekennzeichnet, dass**
die Planetenachsen (28) zudem einem zweiten, koaxial zum Abtriebshohlrad (19) gelagerten Planetenträger (23) zugeordnet ist, wobei das Planetenzahnrad (17) in Axialrichtung zwischen dem ersten Planetenträger (22) und dem zweiten Planetenträger (23) angeordnet ist, wobei
die beiden Planetenträgern (22, 23) gemeinsame Planetenachsen (28) einstückig mit dem ersten (22) oder dem zweiten Planetenträger (23) ausgebildet ist.

2. Getriebeeinheit nach Anspruch 1.
**dadurch gekennzeichnet,**
**dass** der erste Planetenträger (22) auf der Antriebswelle (11) und der zweite Planetenträger (23) im Hohlrad (19) auf der Abtriebswelle (27) gelagert ist.

3. Getriebeeinheit nach Anspruch 1 oder 2,
**dadurch gekennzeichnet,**
**dass** erster Planetenträger (22) und zweiter Planetenträger (23) denselben Wirkradius aufweisen.

4. Getriebeeinheit nach einem der Ansprüche 1 bis 3,
**dadurch gekennzeichnet,**
**dass** die Planetenträger (22, 23) als jeweils zwei Lagerstellen umfassende Schwenkhebel ausgebildet sind.

5. Getriebeeinheit nach einem der Ansprüche 1 bis 4,
**gekennzeichnet durch**
zwei Planetenzahnräder (17, 18) und vier Planetenträger (22, 23, 24, 25), wobei jeden Planetenzahnrad (17, 18) ein Paar aus einem ersten Planetenträger (22, 24) und einem zweiten Planetenträger (24, 25) zugeordnet ist.

6. Getriebeeinheit nach Anspruch 5,
**dadurch gekennzeichnet,**
**dass** die dem zweiten Planetenzahnrads (18) zugeordneten Plartetenträger (24, 25) jeweils koaxial auf den dem ersten Planetenzahnrad (17) zugeordneten Planetenträgern (22, 23) gelagert sind.

7. Getriebeeinheit nach einem der Ansprüche 1 bis 6,
**dadurch gekennzeichnet,**
**dass** die Getriebeeinheit (5) als Radantrieb ausgebildet und in eine Radfelge integriert ist, wobei das Abtriebshohlrad (19) unmittelbar mit der Radnabe (27) verbunden ist.

8. Getriebeeinheit nach Anspruch 7,
**dadurch gekennzeichnet,**
**dass** die Getriebeeinheit (5) als Radnabenantrieb (4) ausgebildet und unmittelbar mit einem Antriebsmotor (6) verbunden ist.

9. Getriebeeinheit nach Anspruch 8,
**dadurch gekennzeichnet,**
**dass** der Antriebsmotor (6) ein Elektromotor ist.

10. Getriebeeinheit nach Anspruch 8 oder 9,
**dadurch gekennzeichnet,**
**dass** die Motorwelle die Antriebswelle (11) der Getriebeeinheit (5) bildet, wobei das Antriebsritzel (21) auf der Motorwelle (11) angeordnet ist.

11. Getriebeeinheit nach einem der Ansprüche 7 bis 10,
**dadurch gekennzeichnet,**
**dass** die Getriebeeinheit (5) in einem als Getriebegehäuse ausgebildeten Radträger (20) angeordnet ist.

12. Getriebeeinheit nach einem der Ansprüche 8 bis 11,
**dadurch gekennzeichnet,**
**dass** zwischen Motorgehäuse (6) und Getriebeeinheit (5) ein Faltenbalg (10) mit transversalem Bewegungsfreiheitsgrad angeordnet ist.

13. Getriebeeinheit nach einem der Ansprüche 1 bis 12,
**gekennzeichnet durch**
eine Linearführung (7, 8) für die transversale Relativbeweglichkeit von Antriebswelle (11) und Abtriebswelle (27).

14. Getriebeeinheit nach einem der Ansprüche 1 bis 12,
**dadurch gekennzeichnet,**
**dass** die Getriebeeinheit (5) mittels einer Radfürungslenkeranordnung (13, 14, 15) mit einem Fahrzeugchassis verbunden ist.

15. Getriebeeinheit nach Anspruch 14,
**dadurch gekennzeichnet,**
**dass** zwischen dem Antriebsritzel (21) der Getriebeeinheit (5) und dem Antriebsmotor (6) zumindest ein Wellen-Ausgleichsgelenk (16) angeordnet ist.

16. Getriebeeinheit nach einem der Ansprüche 1 bis 15,
**dadurch gekennzeichnet,**
**dass** an zumindest einem der Planetenträger (22, 24) eine Verdrehsicheurng (31, 34) zur Unterbindung der Rotation des Planetenträgers (22, 24) um die Antriebswelle (11) angeordnet ist.

17. Getriebeeinheit nach einem der Ansprüche 1 bis 16,
**dadurch gekennzeichnet,**
**dass** die Getriebeeinheit (5) anstelle der Zahnräder (17, 18, 19, 21) entsprechende Reibräder umfasst.

## Claims (Claims for the following Contracting State(s): AT, BE, BG, CH, CY, CZ, DK, EE, ES, FI, FR, GB, GR, HR, HU, IE, IS, IT, LI, LT, LU, LV, MC, MK, MT, NL, NO, PL, PT, RO, SE, SI, SK, SM, TR)

1. Transmission unit (5), in particular for a vehicle wheel, the transmission unit comprising a drive shaft (11) with a drive pinion (21) and an output shaft (27) with an output internal gear (19), the axes of the drive shaft (11) and the output shaft (27) running in parallel, and it being possible for the drive shaft (11) and the output shaft (27) to be moved transversely with respect to one another in a perpendicular direction (9) with regard to the rotational axes of the drive shaft (11) and the output shaft (27), the transmission unit (5) having a planetary gearwheel (17) which is in engagement with the drive pinion (21) and with the output internal gear (19) and is mounted on a planetary pin (28) of a planetary carrier (22), the planetary carrier (22) being mounted coaxially with respect to the drive pinion (21), **characterized in that** the planetary pin (28) is assigned, in addition, to a second planetary carrier (23) which is mounted coaxially with respect to the output internal gear (19), the planetary gearwheel (17) being arranged in the axial direction between the first planetary carrier (22) and the second planetary carrier (23).

2. Transmission unit according to Claim 1, **characterized in that** the planetary pin (28) which is common to both planetary carriers (22, 23) is configured in one piece with the first (22) or the second planetary carrier (23).

3. Transmission unit according to Claim 1 or 2, **characterized in that** the first planetary carrier (22) is mounted on the drive shaft (11) and the second planetary carrier (23) is mounted in the internal gear (19) on the output shaft (27).

4. Transmission unit according to one of Claims 1 to 3, **characterized in that** the first planetary carrier (22) and the second planetary carrier (23) have the same radius of action.

5. Transmission unit according to one of Claims 1 to 4, **characterized in that** the planetary carriers (22, 23) are configured as pivoting levers which comprise in each case two bearing points.

6. Transmission unit according to one of Claims 1 to 5, **characterized by** two planetary gearwheels (17, 18) and four planetary carriers (22, 23, 24, 25), each planetary gearwheel (17, 18) being assigned a pair of a first planetary carrier (22, 24) and a second planetary carrier (24, 25).

7. Transmission unit according to Claim 6, **characterized in that** the planetary carriers (24, 25) which are assigned to the second planetary gearwheel (18) are mounted in each case coaxially on the planetary carriers (22, 23) which are assigned to the first planetary gearwheel (17).

8. Transmission unit according to one of Claims 1 to 7, **characterized in that** the transmission unit (5) is configured as a wheel drive and is integrated into a wheel rim, the output internal gear (19) being connected directly to the wheel hub (27).

9. Transmission unit according to Claim 8, **characterized in that** the transmission unit (5) is configured as a wheel-hub drive (4) and is connected directly to a drive motor (6).

10. Transmission unit according to Claim 9, **characterized in that** the drive motor (6) is an electric motor.

11. Transmission unit according to Claim 9 or 10, **characterized in that** the motor shaft forms the drive shaft (11) of the transmission unit (5), the drive pinion (21) being arranged on the motor shaft (11).

12. Transmission unit according to one of Claims 8 to 11, **characterized in that** the transmission unit (5) is arranged in a wheel support (20) which is configured as a transmission housing.

13. Transmission unit according to one of Claims 9 to 12, **characterized in that** a folding bellows (10) with a transverse degree of movement freedom is arranged between the motor housing (6) and the transmission unit (5).

14. Transmission unit according to one of Claims 1 to 13, **characterized by** a linear guide (7, 8) for the transverse relative movability of the drive shaft (11) and the output shaft (27).

15. Transmission unit according to one of Claims 1 to 13, **characterized in that** the transmission unit (5) is connected to a vehicle chassis by means of a wheel control link arrangement (13, 14, 15).

16. Transmission unit according to Claim 15, **characterized in that** at least one shaft compensation joint (16) is arranged between the drive pinion (21) of the transmission unit (5) and the drive motor (6).

17. Transmission unit according to one of Claims 1 to 16, **characterized in that** an anti-rotation safeguard (31, 34) for suppressing the rotation of the planetary carrier (22, 24) about the drive shaft (11) is arranged on at least one of the planetary carriers (22, 24).

18. Transmission unit according to one of Claims 1 to 17, **characterized in that** the transmission unit (5) comprises corresponding friction wheels instead of the gearwheels (17, 18, 19, 21).

## Claims (Claims for the following Contracting State(s): DE)

1. Transmission unit (5), in particular for a vehicle wheel, the transmission unit comprising a drive shaft (11) with a drive pinion (21) and an output shaft (27) with an output internal gear (19), the axes of the drive shaft (11) and the output shaft (27) running in parallel, and it being possible for the drive shaft (11) and the output shaft (27) to be moved transversely with respect to one another in a perpendicular direction (9) with regard to the rotational axes of the drive shaft (11) and the output shaft (27), the transmission unit (5) having a planetary gearwheel (17) which is in engagement with the drive pinion (21) and with the output internal gear (19) and is mounted on a planetary pin (28) of a planetary carrier (22), the planetary carrier (22) being mounted coaxially with respect to the drive pinion (21), **characterized in that** the planetary pin (28) is assigned, in addition, to a second planetary carrier (23) which is mounted coaxially with respect to the output internal gear (19), the planetary gearwheel (17) being arranged in the axial direction between the first planetary carrier (22) and the second planetary carrier (23), the planetary pin (28) which is common to both planetary carriers (22, 23) being configured in one piece with the first (22) or the second planetary carrier (23).

2. Transmission unit according to Claim 1, **characterized in that** the first planetary carrier (22) is mounted on the drive shaft (11) and the second planetary carrier (23) is mounted in the internal gear (19) on the output shaft (27).

3. Transmission unit according to Claim 1 or 2, **characterized in that** the first planetary carrier (22) and the second planetary carrier (23) have the same radius of action.

4. Transmission unit according to one of Claims 1 to 3, **characterized in that** the planetary carriers (22, 23) are configured as pivoting levers which comprise in each case two bearing points.

5. Transmission unit according to one of Claims 1 to 4, **characterized by** two planetary gearwheels (17, 18) and four planetary carriers (22, 23, 24, 25), each planetary gearwheel (17, 18) being assigned a pair of a first planetary carrier (22, 24) and a second planetary carrier (24, 25).

6. Transmission unit according to Claim 5, **characterized in that** the planetary carriers (24, 25) which are assigned to the second planetary gearwheel (18) are mounted in each case coaxially on the planetary carriers (22, 23) which are assigned to the first planetary gearwheel (17).

7. Transmission unit according to one of Claims 1 to 6, **characterized in that** the transmission unit (5) is configured as a wheel drive and is integrated into a wheel rim, the output internal gear (19) being connected directly to the wheel hub (27).

8. Transmission unit according to Claim 7, **characterized in that** the transmission unit (5) is configured as a wheel-hub drive (4) and is connected directly to a drive motor (6).

9. Transmission unit according to Claim 8, **characterized in that** the drive motor (6) is an electric motor.

10. Transmission unit according to Claim 8 or 9, **characterized in that** the motor shaft forms the drive shaft (11) of the transmission unit (5), the drive pinion (21) being arranged on the motor shaft (11).

11. Transmission unit according to one of Claims 7 to 10, **characterized in that** the transmission unit (5) is arranged in a wheel support (20) which is configured as a transmission housing.

12. Transmission unit according to one of Claims 8 to 11, **characterized in that** a folding bellows (10) with a transverse degree of movement freedom is arranged between the motor housing (6) and the transmission unit (5).

13. Transmission unit according to one of Claims 1 to 12, **characterized by** a linear guide (7, 8) for the transverse relative movability of the drive shaft (11) and the output shaft (27).

14. Transmission unit according to one of Claims 1 to 12, **characterized in that** the transmission unit (5) is connected to a vehicle chassis by means of a wheel control link arrangement (13, 14, 15).

15. Transmission unit according to Claim 14, **characterized in that** at least one shaft compensation joint (16) is arranged between the drive pinion (21) of the transmission unit (5) and the drive motor (6).

16. Transmission unit according to one of Claims 1 to 15, **characterized in that** an anti-rotation safeguard (31, 34) for suppressing the rotation of the planetary carrier (22, 24) about the drive shaft (11) is arranged on at least one of the planetary carriers (22, 24).

17. Transmission unit according to one of Claims 1 to 16, **characterized in that** the transmission unit (5) comprises corresponding friction wheels instead of the gearwheels (17, 18, 19, 21).

## Revendications (Revendications pour l'(les) Etat(s) contractant(s) suivant(s): AT, BE, BG, CH, CY, CZ, DK, EE, ES, FI, FR, GB, GR, HR, HU, IE, IS, IT, LI, LT, ZU, LV, MC, MK, MT, NL, NO, PL, PT, RO, SE, SI, SK, SM, TR)

1. Unité de transmission (5), en particulier pour une roue de véhicule, l'unité de transmission comprenant un arbre d'entraînement (11) avec un pignon d'entraînement (21) et un arbre de sortie (27) avec une couronne de sortie (19), les axes de l'arbre d'entraînement (11) et de l'arbre de sortie (27) s'étendant en parallèle, et l'arbre d'entraînement (11) et l'arbre de sortie (27) pouvant être déplacés l'un par rapport à l'autre transversalement dans une direction perpendiculaire (9) par rapport aux axes de rotation de l'arbre d'entraînement (11) et de l'arbre de sortie (27), l'unité de transmission (5) présentant une roue dentée satellite (17) qui est en prise avec le pignon d'entraînement (21) et avec la couronne de sortie (19) et qui est supportée sur un axe planétaire (28) d'un porte-satellites (22), le porte-satellites (22) étant supporté coaxialement au pignon d'entraînement (21),
**caractérisée en ce que**
l'axe planétaire (28) est en outre associé à un deuxième porte-satellites (23) supporté coaxialement par rapport à la couronne de sortie (19), la roue dentée satellite (17) étant disposée dans la direction axiale entre le premier porte-satellites (22) et le deuxième porte-satellites (23).

2. Unité de transmission selon la revendication 1,
**caractérisée en ce que**
l'axe planétaire (28) commun aux deux porte-satellites (22, 23) est réalisé d'une seule pièce avec le premier (22) ou le deuxième porte-satellites (23).

3. Unité de transmission selon la revendication 1 ou 2,
**caractérisée en ce que**
le premier porte-satellites (22) est supporté sur l'arbre d'entraînement (11) et le deuxième porte-satellites (23) est supporté dans la couronne (19) sur l'arbre de sortie (27).

4. Unité de transmission selon l'une quelconque des revendications 1 à 3,
**caractérisée en ce que**
le premier porte-satellites (22) et le deuxième porte-satellites (23) présentent le même rayon d'action.

5. Unité de transmission selon l'une quelconque des revendications 1 à 4,
**caractérisée en ce que**
les porte-satellites (22, 23) sont réalisés sous forme de levier pivotant comprenant à chaque fois deux points de palier.

6. Unité de transmission selon l'une quelconque des revendications 1 à 5,
**caractérisée par**
deux roues dentées satellites (17, 18) et quatre porte-satellites (22, 23, 24, 25), une paire d'un premier porte-satellites (22, 24) et d'un deuxième porte-satellites (24, 25) étant associée à chaque roue dentée satellite (17, 18).

7. Unité de transmission selon la revendication 6,
**caractérisée en ce que**
les porte-satellites (24, 25) associés à la deuxième roue dentée satellite (18) sont montés à chaque fois coaxialement sur les porte-satellites (22, 23) associés à la première roue dentée satellite (17).

8. Unité de transmission selon l'une quelconque des revendications 1 à 7,
**caractérisée en ce que**
l'unité de transmission (5) est réalisée sous forme d'entraînement de roue et est intégrée dans une jante de roue, la couronne de sortie (19) étant directement connectée au moyeu de roue (27).

9. Unité de transmission selon la revendication 8,
**caractérisée en ce que**
l'unité de transmission (5) est réalisée sous forme d'entraînement de moyeu de roue (4) et est connectée directement à un moteur d'entraînement (6).

10. Unité de transmission selon la revendication 9,
**caractérisée en ce que**
le moteur d'entraînement (6) est un moteur électrique.

11. Unité de transmission selon la revendication 9 ou 10,
**caractérisée en ce que**
l'arbre de moteur forme l'arbre d'entraînement (11) de l'unité de transmission (5), le pignon d'entraînement (21) étant disposé sur l'arbre de moteur (11).

12. Unité de transmission selon l'une quelconque des revendications 8 à 11,
**caractérisée en ce que**
l'unité de transmission (5) est disposée dans un support de roue (20) réalisé en tant que boîtier de transmission.

13. Unité de transmission selon l'une quelconque des revendications 9 à 12,
**caractérisée en ce**
**qu'**entre le boîtier de moteur (6) et l'unité de transmission (5) est disposé un soufflet (10) avec un degré de liberté de mouvement transversal.

14. Unité de transmission selon l'une quelconque des revendications 1 à 13,
**caractérisée par**
un guidage linéaire (7, 8) pour la mobilité relative transversale de l'arbre d'entraînement (11) et de l'arbre de sortie (27).

15. Unité de transmission selon l'une quelconque des revendications 1 à 13,
**caractérisée en ce que**
l'unité de transmission (5) est connectée au moyen d'un agencement de bras oscillant de guidage de roue (13, 14, 15) à un châssis de véhicule.

16. Unité de transmission selon la revendication 15,
**caractérisée en ce**
**qu'**entre le pignon d'entraînement (21) de l'unité de transmission (5) et le moteur d'entraînement (6) est disposé au moins un joint de compensation d'arbre (16).

17. Unité de transmission selon l'une quelconque des revendications 1 à 16,
**caractérisée en ce que**
sur au moins l'un des porte-satellites (22, 24) est disposée une fixation en rotation (31, 34) pour supprimer la rotation du porte-satellites (22, 24) autour de l'arbre d'entraînement (11).

18. Unité de transmission selon l'une quelconque des revendications 1 à 17,
**caractérisée en ce que**
l'unité de transmission (5) comprend des roues de friction correspondantes au lieu des roues dentées (17, 18, 19, 21).

## Revendications (Revendications pour l'(les) Etat(s) contractant(s) suivant(s): DE)

1. Unité de transmission (5), en particulier pour une roue de véhicule, l'unité de transmission comprenant un arbre d'entraînement (11) avec un pignon d'entraînement (21) et un arbre de sortie (27) avec une couronne de sortie (19), les axes de l'arbre d'entraînement (11) et de l'arbre de sortie (27) s'étendant en parallèle, et l'arbre d'entraînement (11) et l'arbre de sortie (27) pouvant être déplacés l'un par rapport à l'autre transversalement dans une direction perpendiculaire (9) par rapport aux axes de rotation de l'arbre d'entraînement (11) et de l'arbre de sortie (27), l'unité de transmission (5) présentant une roue dentée satellite (17) qui est en prise avec le pignon d'entraînement (21) et avec la couronne de sortie (19) et qui est supportée sur un axe planétaire (28) d'un porte-satellites (22), le porte-satellites (22) étant supporté coaxialement au pignon d'entraînement (21),
**caractérisée en ce que**
l'axe planétaire (28) est en outre associé à un deuxième porte-satellites (23) supporté coaxialement par rapport à la couronne de sortie (19), la roue dentée satellite (17) étant disposée dans la direction axiale entre le premier porte-satellites (22) et le deuxième porte-satellites (23), l'axe planétaire (28) commun aux deux porte-satellites (22, 23) étant réalisé d'une seule pièce avec le premier (22) ou le deuxième porte-satellites (23).

2. Unité de transmission selon la revendication 1,
**caractérisée en ce que**
le premier porte-satellites (22) est supporté sur l'arbre d'entraînement (11) et le deuxième porte-satellites (23) est supporté dans la couronne (19) sur l'arbre de sortie (27).

3. Unité de transmission selon la revendication 1 ou 2,
**caractérisée en ce que**
le premier porte-satellites (22) et le deuxième porte-satellites (23) présentent le même rayon d'action.

4. Unité de transmission selon l'une quelconque des revendications 1 à 3,
**caractérisée en ce que**
les porte-satellites (22, 23) sont réalisés sous forme de levier pivotant comprenant à chaque fois deux points de palier.

5. Unité de transmission selon l'une quelconque des revendications 1 à 4,
**caractérisée par**
deux roues dentées satellites (17, 18) et quatre porte-satellites (22, 23, 24, 25), une paire d'un premier porte-satellites (22, 24) et d'un deuxième porte-satellites (24, 25) étant associée à chaque roue dentée satellite (17, 18).

6. Unité de transmission selon la revendication 5,
**caractérisée en ce que**
les porte-satellites (24, 25) associés à la deuxième roue dentée satellite (18) sont montés à chaque fois coaxialement sur les porte-satellites (22, 23) associés à la première roue dentée satellite (17).

7. Unité de transmission selon l'une quelconque des revendications 1 à 6,
**caractérisée en ce que**
l'unité de transmission (5) est réalisée sous forme d'entraînement de roue et est intégrée dans une jante de roue, la couronne de sortie (19) étant directement connectée au moyeu de roue (27).

8. Unité de transmission selon la revendication 7,
**caractérisée en ce que**
l'unité de transmission (5) est réalisée sous forme d'entraînement de moyeu de roue (4) et est connectée directement à un moteur d'entraînement (6).

9. Unité de transmission selon la revendication 8,
**caractérisée en ce que**
le moteur d'entraînement (6) est un moteur électrique.

10. Unité de transmission selon la revendication 8 ou 9,
**caractérisée en ce que**
l'arbre de moteur forme l'arbre d'entraînement (11) de l'unité de transmission (5), le pignon d'entraînement (21) étant disposé sur l'arbre de moteur (11).

11. Unité de transmission selon l'une quelconque des revendications 7 à 10,
**caractérisée en ce que**
l'unité de transmission (5) est disposée dans un support de roue (20) réalisé en tant que boîtier de transmission.

12. Unité de transmission selon l'une quelconque des revendications 8 à 11,
**caractérisée en ce**
**qu'**entre le boîtier de moteur (6) et l'unité de transmission (5) est disposé un soufflet (10) avec un degré de liberté de mouvement transversal.

13. Unité de transmission selon l'une quelconque des revendications 1 à 12,
**caractérisée par**
un guidage linéaire (7, 8) pour la mobilité relative transversale de l'arbre d'entraînement (11) et de l'arbre de sortie (27).

14. Unité de transmission selon l'une quelconque des revendications 1 à 12,
**caractérisée en ce que**
l'unité de transmission (5) est connectée au moyen d'un agencement de bras oscillant de guidage de roue (13, 14, 15) à un châssis de véhicule.

15. Unité de transmission selon la revendication 14,
**caractérisée en ce**
**qu'**entre le pignon d'entraînement (21) de l'unité de transmission (5) et le moteur d'entraînement (6) est disposé au moins un joint de compensation d'arbre (16).

16. Unité de transmission selon l'une quelconque des revendications 1 à 15,
**caractérisée en ce que**
sur au moins l'un des porte-satellites (22, 24) est disposée une fixation en rotation (31, 34) pour supprimer la rotation du porte-satellites (22, 24) autour de l'arbre d'entraînement (11).

17. Unité de transmission selon l'une quelconque des revendications 1 à 16,
**caractérisée en ce que**
l'unité de transmission (5) comprend des roues de friction correspondantes au lieu des roues dentées (17, 18, 19, 21).
